(19) Europäisches Patentamt
European Patent Office
Office européen des brevets

(11) **EP 4 682 846 A2**

(12) **EUROPEAN PATENT APPLICATION**

(43) Date of publication:
**21.01.2026 Bulletin 2026/04**

(21) Application number: **25193551.6**

(22) Date of filing: **29.04.2021**

(51) International Patent Classification (IPC):
***G06V 40/16*** *(2022.01)*

(52) Cooperative Patent Classification (CPC):
**G10L 15/25; G06V 20/59; G06V 40/16;**
G10L 15/063; G10L 2015/223

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.07.2020 CN 202010631879**

(62) Document number(s) of the earlier application(s) in
accordance with Art. 76 EPC:
**21833146.0 / 4 163 913**

(71) Applicant: **Shenzhen Yinwang Intelligent
Technologies Co., Ltd.
Shenzhen, Guangdong 518110 (CN)**

(72) Inventors:
• **QIU, Meiqing
  Shenzhen, 518129 (CN)**
• **JIANG, Huiying
  Shenzhen, 518129 (CN)**
• **HUANG, Yi
  Shenzhen, 518129 (CN)**

(74) Representative: **Pfenning, Meinig & Partner mbB
Patent- und Rechtsanwälte
Theresienhöhe 11a
80339 München (DE)**
Remarks:
•This application was filed on 01-08-2025 as a
divisional application to the application mentioned
under INID code 62.
•Claims filed after the date of filing of the application /
after the date of receipt of the divisional application
(Rule 68(4) EPC).

(54) **SPEECH INSTRUCTION CONTROL METHOD IN VEHICLE CABIN AND RELATED DEVICE**

(57) Embodiments of the present invention are specifically applied to the intelligent cockpit field, and disclose a speech control method in a vehicle cabin. The speech control method includes: obtaining audio data in the vehicle cabin; when recognizing that the audio data includes instruction information of a target type, obtaining image data in an instruction information-related event segment in the audio data in the vehicle cabin; obtaining, based on the image data, image data of an in-vehicle member in a specific position in the vehicle cabin, and extracting lip motion information of the in-vehicle member in the position from the image data; inputting the instruction information and the lip motion information into a target feature matching model, to obtain a matching degree between the lip motion information of the in-vehicle member in the specific position and the instruction information; and determining, based on the matching degree, whether to execute an instruction corresponding to the instruction information.

**EP 4 682 846 A2**

**Description**

This application claims priority to Chinese Patent Application No. 202010631879.5, filed with the China National Intellectual Property Administration on July 3, 2020 and entitled "SPEECH INSTRUCTION CONTROL METHOD IN VEHICLE CABIN AND RELATED DEVICE", which is incorporated herein by reference in its entirety.

**TECHNICAL FIELD**

The present invention relates to the field of human-machine interaction technologies, and in particular, to a speech instruction control method in a vehicle cabin and a related device.

**BACKGROUND**

As self-driving technologies develop, vehicles are increasingly intelligent, and intelligent speech control in a vehicle cabin accordingly becomes a mainstream requirement on a current intelligent cockpit. More vehicles begin to have a speech interaction function, and can perform a corresponding function according to a speech instruction of an in-vehicle member.

The vehicle cabin can accommodate a plurality of members, and different in-vehicle members may have different control requirements. As a result, when executing special speech instructions, an in-vehicle intelligent device needs to obtain specific positions of instruction senders, and then determine how to instruct the corresponding instructions. In a multi-person scenario in a vehicle cabin, some instructions in a vehicle need to be operated in specific positions of the vehicle cabin, for example, to adjust an air volume of a specific air exhaust vent or adjust a volume of a specific speaker. In this case, when receiving a speech instruction for decreasing an air volume of an air exhaust vent, a vehicle intelligent device cannot perform refined control adjustment in the vehicle cabin through the speech if the vehicle intelligent device fails to recognize a specific position of a current instruction sender. Some vehicles may control vehicle running through a speech, for example, perform self-driving or automatic parking. However, when there are a plurality of members in the vehicle, for example, there are children in the vehicle, how to determine when a driving-related speech instruction can be executed, or when the driving-related speech instruction cannot be executed? Therefore, determining of an identity and permission of an instruction sender to prevent misoperation of the vehicle is one of the problems in the self-driving field that need to be resolved for human-machine interaction control in the vehicle cabin.

**SUMMARY**

Embodiments of the present invention provide a speech instruction control method and a related device, to improve accuracy of executing a speech instruction and reduce misoperation or misidentification in a multi-person scenario in a vehicle.

According to a first aspect, an embodiment of the present invention provides a speech control method in a vehicle cabin, including: obtaining a first-type instruction and lip motion information of in-vehicle members located in N positions in a vehicle cabin in a target time period, where the first-type instruction is obtained based on target audio data collected in the vehicle cabin, the lip motion information of the in-vehicle member is obtained when the first-type instruction is recognized from the target audio data, and the target time period is a time period corresponding to the first-type instruction in the audio data; matching the first-type instruction with the lip motion information of the in-vehicle members in the N positions in the vehicle cabin, and obtaining a target position based on a matching result between the lip motion information of the in-vehicle members in the N positions and the first-type instruction, where the target position is a position of an in-vehicle member whose lip motion information matches the first-type instruction in the matching result; and sending indication information indicating to execute the first-type instruction in the target position.

This embodiment of the present invention can be applied to refined speech instruction control in the vehicle cabin. When it is recognized that a speech instruction is an instruction that can be executed only after a position needs to be further determined, for example, an operation instruction for an apparatus in the vehicle cabin, such as play a video, adjust a speaker, adjust an air conditioner, or adjust a seat that needs to determine a specific position of the instruction to perform a local operation in a targeted manner. Lip motion information of a member in each position in the vehicle and recognized specific instruction information are obtained to determine a position of a member that sends the instruction, so that operation control can be performed in a specific position area in a targeted manner. In the speech control method, because video data is processed and a degree of matching between a partial feature of the video data and instruction information is analyzed, it can occur locally, that is, the vehicle or an intelligent device on the vehicle performs the method. Alternatively, processing and matching actions of the video data can be performed on a cloud.

The method in this embodiment of the present invention is applicable to a scenario of a vehicle with any quantity of people, and in particular, is applicable to a scenario in which there are a plurality of members in the vehicle and the plurality of people are speaking at the same time. In this case, the position information of the member that sends the speech instruction can be accurately positioned with reference to in-vehicle position distribution information and matching between the lip motion information and the instruction information. This can determine the position area for executing the instruction. N mentioned in the method in this embodiment of the present invention does not necessarily represent all members in the vehicle, and may be all members in the vehicle, or may be some members.

In a possible implementation, the obtaining a first-type instruction and lip motion information of in-vehicle members located in N positions in a vehicle cabin is specifically: obtaining the target audio data in the vehicle cabin; obtaining image data in the vehicle cabin when recognizing that the target audio data includes the first-type instruction; and extracting the lip motion information of the in-vehicle members in the N positions in the vehicle cabin from the image data in the vehicle cabin. In this embodiment of the present invention, the extracting the lip motion information of the members in the N positions in the vehicle from the image data in the vehicle cabin mentioned may be specifically: recognizing the N face areas in the video data based on a facial recognition algorithm, extracting a lip motion video or extracting a video frame sequence through sampling in each of the N face areas, and determining the lip motion information of the N members based on the lip motion video or the video frame sequence in each face area. The image data is usually obtained through collection by one or more cameras in the vehicle, and there may be a plurality of types of the cameras.

In addition, because there are usually a plurality of cameras in an environment in the vehicle cabin, some cameras can obtain video data of different angles of view by changing a photographing angle. Therefore, the image data mentioned in this embodiment of the present invention can be image data obtained by one camera from one angle. When photographing is performed from some angles, a case in which members at different positions in the vehicle may be blocked from each other may exist. Therefore, the image data in this embodiment of the present invention can also be image data from a same camera from different angles, or image data from the plurality of cameras, or another combination of the foregoing cases.

In a possible implementation, the extracting the lip motion information of the in-vehicle members in the N positions in the vehicle cabin from the image data in the vehicle cabin is specifically: extracting the lip motion information of the in-vehicle members in the N positions in the vehicle cabin from the image data in the vehicle cabin when recognizing more than one in-vehicle member. In a specific implementation process of this embodiment of the present invention, to avoid a waste of computing resources, after the first instruction type is recognized, a quantity of people in the vehicle cabin can be determined based on the obtained in-vehicle image data. Lip motion information does not need to be extracted when there is only one person in the vehicle cabin, and lip motion information of persons in the positions in which the persons take only when there is more than one person.

In a possible implementation, the matching the first-type instruction with the lip motion information of the in-vehicle members in the N positions in the vehicle cabin, and obtaining a target position based on a matching result between the lip motion information of the in-vehicle members in the N positions and the first-type instruction is specifically: obtaining, based on the first-type instruction and the lip motion information of the N in-vehicle members located in the vehicle cabin, a matching degree between lip motion information of an in-vehicle member in each of the N positions and the instruction information, where N is an integer greater than 1; and using, as the target position, a position of an in-vehicle member corresponding to lip motion information with the highest matching degree.

The matching degree can be obtained in a plurality of manners, and can be usually obtained by using a target matching model. The target feature matching model is a feature matching model obtained through training by using lip motion information of a training user and one or more pieces of speech information (the speech information may be a speech waveform sequence or text information corresponding to a speech) as input and matching degrees between the lip motion information of the training user and the M pieces of speech information as M labels.

In a model training manner in this embodiment of the present invention, model inference manners vary based on different training sample data. When a plurality of groups of lip motion information, for example, five pieces of lip motion information, are used for input, the five pieces of lip motion information and each of the M pieces of speech information are constructed into M groups of samples as input, matching degrees between each of the five pieces of lip motion information and the speech information in the sample are used as output, and label information is a target output result of training. The model obtained through training also uses the five pieces of lip motion information and the target instruction information as input during inference. When there are fewer than five persons in the vehicle, lip information in a vacant position can be used as a default value for input, for example, an all-zero sequence, and a matching degree corresponding to the instruction information is output. Alternatively, a single piece of lip motion information and the speech information can be used as a group of samples, and a matching label is a target training result for training. When a model obtained through such training performs inference, a lip motion instruction of each member in the vehicle and the instruction information need to be used as input, and matching degrees corresponding to members in the plurality of positions are separately obtained.

In a possible implementation, the first-type instruction is a speech waveform sequence extracted from the audio data or text instruction information recognized based on the audio data.

In a possible implementation, the lip motion information of the in-vehicle members in the N positions in the vehicle cabin is image sequences of lip motion of the in-vehicle members in the N positions in the vehicle cabin in the target time period.

In this embodiment of the present invention, the position in which the member sends a speech related to the instruction is learned based on the matching degree between the obtained speech instruction and the lip information of the in-vehicle member in each position, and the matching degree between the instruction information and the lip motion information of the member is learned by using the matching model. The instruction information to be obtained varies based on the matching model. Different lip motion information can be extracted from a lip motion video according to a model training requirement. For example, the lip motion information may be an image sequence of lip motion in the target time period or a vector parameter indicating a time sequence change of an upper-lower lip distance. Similarly, the first-type instruction may also have a plurality of forms, and may be the speech waveform sequence, or may be the text information corresponding to the instruction.

In a possible implementation, the audio data in the vehicle cabin is obtained based on audio data collected by a microphone in a specified position area in the vehicle cabin.

In a possible implementation, the audio data in the vehicle cabin is obtained based on the target audio data selected from audio data collected by a plurality of microphones in the vehicle cabin.

The plurality of microphones usually exist in the vehicle cabin, and are disposed in different positions in the vehicle cabin. Therefore, to obtain an optimal audio effect for the audio data collected in the vehicle cabin, the audio data in the vehicle cabin mentioned in this embodiment of the present invention may be obtained after comprehensive processing is performed on a plurality of pieces of audio data; may be recorded audio data with an optimal parameter, namely, with optimal speech quality, selected according to a preset rule after the audio data collected by the plurality of microphones in the vehicle cabin is comprehensively compared; or audio data collected by a microphone in the instruction position, for example, audio data collected by a microphone disposed in a central position area in the vehicle.

In a possible implementation, the target feature matching model includes a first model, a second model, and a third model. The typing the instruction information and the lip motion information of the in-vehicle members in the N positions in the vehicle cabin into the target feature matching model, to obtain matching degrees between the lip motion information of the in-vehicle members in the N positions in the vehicle cabin and the instruction information includes: typing the instruction information into the first model, to obtain a speech feature, where the speech feature is a K-dimensional speech feature, and K is an integer greater than 0; typing the lip motion information of the in-vehicle members in the N positions in the vehicle cabin into the second model, to obtain N image sequence features, where each of the N image sequence features is a K-dimensional image sequence feature; and typing the speech feature and the N image sequence features into the third model, to obtain matching degrees between the N image sequence features and the speech feature.

In a possible implementation, the target feature matching model includes a first model and a second model. The typing the instruction information and the lip motion information of the in-vehicle members in the N positions in the vehicle cabin into the target feature matching model, to obtain matching degrees between the lip motion information of the in-vehicle members in the N positions in the vehicle cabin and the instruction information includes: typing the audio data into the first model to obtain corresponding instruction information; typing the lip motion information of the in-vehicle members in the N positions in the vehicle cabin into the second model, where lip motion information of each in-vehicle member corresponds to one image sequence feature; typing the N image sequence features into the second model simultaneously or separately, to obtain instruction information corresponding to each piece of lip motion information; and determining, based on recognition results of the two models, the target position member that sends the instruction.

In an implementation of the model in this embodiment of the present invention, the instruction information output by the first model may be an identifier corresponding to an instruction and a matching degree. The model selects and outputs an instruction identifier corresponding to an instruction with the highest matching degree, where the identifier may be an instruction code, or may be a text feature corresponding to the instruction. Determining is performed based on the output results of the first model and the second model. There may be a plurality of determining rules. For example, a position member whose instruction is same as the instruction information output by the first model is recognized. If recognized members in a plurality of positions whose instructions are the same as the instruction information recognized by the first model, matching degrees output by the second model are compared, and a target position with a higher matching degree is selected to execute the instruction; or instruction information with the highest matching degree recognized in the second model is selected and compared with the instruction information from the first model, and if the instruction information is the same, the position corresponding to the instruction information with the highest matching degree in the second model is determined as the target position.

In a possible implementation, the method further includes: generating a correspondence between the lip motion information of the in-vehicle members in the N positions and the N positions; and the using, as the target position, a position of an in-vehicle member corresponding to lip motion information with the highest matching degree includes: obtaining the target lip motion information with the highest matching degree; and determining, based on the correspondence between the lip motion information of the in-vehicle members in the N positions and the N positions, the position corresponding to the target lip motion information as the target position.

The generating a correspondence between the lip motion information of the in-vehicle members in the N positions and the N positions may be obtaining a member relationship in each position by collecting an in-vehicle image, and then mapping the lip motion information of each member to the position relationship, where the image data may be a same image extracted from lip information, or may be from an independent collection process.

In a possible implementation, the method further includes: generating a correspondence between the lip motion information of the in-vehicle members in the N positions and identities of the in-vehicle members in the N positions; and the using, as the target position, a position of an in-vehicle member corresponding to lip motion information with the highest matching degree includes: obtaining the target lip motion information with the highest matching degree; determining the target in-vehicle member based on the correspondence between the lip motion information of the in-vehicle members in the N positions and the identities of the in-vehicle members in the N positions; and determining position information of the target in-vehicle member as the target position, where the position information of the target in-vehicle member is determined based on data from a sensor in the vehicle.

The first-type instruction mentioned in this embodiment of the present invention may be a control instruction in the vehicle cabin, and is mainly applicable to an instruction interaction scenario in which the position information needs to be recognized in the vehicle cabin to determine the target area for executing the instruction. An in-vehicle user sometimes provides specific position information when executing a speech instruction, for example, closing a vehicle window in a right rear seat. Therefore, in a possible implementation, this type of instruction with specific position information can be considered not to be the first-type instruction. The first-type instruction may be an instruction that needs to be executed by distinguishing position areas but the instruction does not include position area information.

According to a second aspect, an embodiment of the present invention further provides a speech control method in a vehicle cabin, including: obtaining a first-type instruction and lip motion information of an in-vehicle member located in a first position in a vehicle, where the first-type instruction is obtained based on target audio data collected in a vehicle cabin, the lip motion information of the in-vehicle member in the first position is obtained when the second-type instruction is recognized from the target audio data, and the target time period is a time period corresponding to the second-type instruction in the audio data; matching the second-type instruction with the lip motion information of the in-vehicle member in the first position, to obtain a matching result; and when determining, based on the matching result, that the second-type instruction matches the lip motion information of the in-vehicle member in the first position, sending indication information indicating to execute the second-type instruction.

This embodiment of the present invention may be applied to refined speech instruction control in the vehicle cabin. When it is recognized that a speech instruction is an instruction that can be executed only after an identity or permission of an instruction sender is determined, for example, a running control instruction of a vehicle, or another instruction related to an operation on privacy information, such as switching a driving mode, controlling a driving direction, and viewing historical call data, based on a special environment of the vehicle, a member of a driver's seat usually has the highest permission by default. Therefore, when obtaining the instruction that needs to confirm the identity of the sender, the vehicle obtains lip motion information of the member in a specific position (for example, the driver's seat) and the recognized specific instruction information to determine whether the instruction is sent by the member at the driver's seat, so that operation control can be performed on the specific position area in a targeted manner. In the speech control method, because video data is processed and a degree of matching between a partial feature of the video data and instruction information is analyzed, it can occur locally, that is, the vehicle or an intelligent device on the vehicle performs the method. Alternatively, processing and matching actions of the video data can be performed on a cloud. In addition to collecting the lip motion information of the member at the driver's seat, it may also be preset or manually set that members in one or more positions have a control permission of a type of instruction. When such the instruction is recognized, lip motion information of a person in a corresponding position is obtained for matching analysis.

In a possible implementation, a position of a specific user (for example, a vehicle owner) in a current in-vehicle environment may also be recognized by using a facial recognition technology, and the position of the specific user is used as the first position. The lip motion information of the member at the driver's seat is usually obtained by default.

The method in this embodiment of the present invention is applicable to a scenario of a vehicle with any quantity of people, and in particular, is applicable to a scenario in which there are a plurality of members in the vehicle and the plurality of people are speaking at the same time. In this case, whether the speech instruction is sent by the member in the specific position can be accurately determined with reference to in-vehicle position distribution information and matching between the lip motion information and the instruction information, and whether the instruction is executed is further determined. The matching manner may be obtaining a plurality of members (including the member in the first position) in the vehicle for matching, and determining whether the member in the first position has the highest matching degree; or may be obtaining only the member in the first position for matching, and determining that a result is matching when a matching degree reaches a threshold, and the instruction may be executed.

In an embodiment of determining whether an instruction is the second-type instruction, a case in which the specific position usually needs to be determined is for a scenario in which only a member in a specific position has permission to execute such type of instruction. For example, the second-type instruction is usually a vehicle control instruction, to prevent misoperation, such type of instruction is usually set only for the member in the specific position such as the driver's seat that has a capability of performing vehicle running control by using a speech. A common implementation is obtaining the lip motion information of the user at the driver's seat for matching with the second instruction information, and when the result is matching, determining that the second-type instruction is sent by the user at the driver's seat, and executing the second-type instruction. It is usually considered by default that the user at the driver's seat usually has permission to control the vehicle. It may be manually set that a passenger in another position has the speech control permission, and the first position is also the another position in the vehicle.

Alternatively, it may be set according to a requirement that some instructions can be executed only by the member in the specific position. In this case, an execution rule of such type of instruction may also be determined with reference to an execution manner of the second-type instruction.

In this embodiment of the present invention, the obtaining a second-type instruction and lip motion information of an in-vehicle member located in a first position in a vehicle may be specifically: obtaining the target audio data in the vehicle cabin; obtaining image data in the vehicle cabin when recognizing that the target audio data includes the second-type instruction; and extracting the lip motion information of the in-vehicle member in the first position from the image data in the vehicle cabin.

In an implementation process of the foregoing solution, the matching the second-type instruction with the lip motion information of the in-vehicle member in the first position, to obtain a matching result is specifically: determining the matching result between the second-type instruction and the lip motion information of the in-vehicle member in the first position based on a preset threshold and a matching degree between the second-type instruction and the lip motion information of the in-vehicle member in the first position.

The second-type instruction in this embodiment of the present invention may be a speech waveform sequence extracted from the audio data or text instruction information recognized based on the audio data. Lip motion information of an in-vehicle member is an image sequence of lip motion of the in-vehicle member in the target time period.

In an implementation process, this embodiment of the present invention further includes: when the audio data includes the second-type instruction, obtaining image data of in-vehicle members in other N positions in the vehicle; and extracting, from the image data of the in-vehicle members in the other N positions in the vehicle, lip motion information of the in-vehicle members in the other N positions in the vehicle in the target time period, where the matching the second-type instruction with the lip motion information of the in-vehicle member located in the first position in the vehicle, to obtain a matching result is specifically: matching the second-type instruction with the lip motion information of the in-vehicle member located in the first position in the vehicle and the lip motion information of the in-vehicle members in the N positions, to obtain matching degrees between lip motion information of (N + 1) in-vehicle members and the second-type instruction; and obtaining lip motion information with the highest matching degree; and the when determining, based on the matching result, that the second-type instruction matches the lip motion information of the in-vehicle member located in the first position in the vehicle, sending indication information indicating to execute the second-type instruction is specifically: when the lip motion information with the highest matching degree is the lip motion information of the in-vehicle member located in the first position in the vehicle, sending the indication information indicating to execute the second-type instruction.

In this embodiment of the present invention, the lip motion information of the member in the position in the vehicle is extracted from the video data of the member in the position in the vehicle. A specific method is recognizing a plurality of face areas in the video data based on a facial recognition algorithm, extracting a lip motion video in each of the plurality of face areas, and determining, based on the lip motion video in each face area, lip motion information corresponding to each face.

In a possible implementation, the audio data in the vehicle cabin is obtained based on data collected by a plurality of microphones in the vehicle cabin; or the audio data in the vehicle cabin is obtained based on audio data collected by a microphone in a specified position area in the vehicle cabin.

According to a third aspect, an embodiment of the present invention provides a speech instruction control device, including a processor. The processor is configured to: obtain a first-type instruction and lip motion information of in-vehicle members located in N positions in a vehicle cabin in a target time period, where the first-type instruction is obtained based on target audio data collected in the vehicle cabin, the lip motion information of the in-vehicle member is obtained when the first-type instruction is recognized from the target audio data, and the target time period is a time period corresponding to the first-type instruction in the audio data; match the first-type instruction with the lip motion information of the in-vehicle members in the N positions in the vehicle cabin, and obtain a target position based on a matching result between the lip motion information of the in-vehicle members in the N positions and the first-type instruction, where the target position is a position of an in-vehicle member whose lip motion information matches the first-type instruction in the matching result; and send indication information indicating to execute the first-type instruction in the target position.

This embodiment of the present invention can be applied to refined speech instruction control in the vehicle cabin. When it is recognized that a speech instruction is an instruction that can be executed only after a position needs to be further determined, for example, an operation instruction for an apparatus in the vehicle cabin, such as play a video, adjust a speaker, adjust an air conditioner, or adjust a seat that needs to determine a specific position of the instruction to perform a local operation in a targeted manner. Lip motion information of a member in each position in the vehicle and recognized specific instruction information are obtained to determine a position of a member that sends the instruction, so that operation control can be performed in a specific position area in a targeted manner. The speech control device needs to process video data and analyze a matching degree between a partial feature of the video data and instruction information. Therefore, the device may be a local device, for example, may be an intelligent vehicle-mounted device, or a vehicle-mounted processor chip, or may be a vehicle-mounted system including a microphone and a camera, or may be an intelligent vehicle. In addition, based on different implementations of the solution, a cloud server may also perform actions of processing and matching the video data after obtaining the data from a vehicle-mounted camera and a speaker in the vehicle.

In a possible implementation, the processor is configured to: obtain the target audio data in the vehicle cabin; obtain image data in the vehicle cabin when it is recognized that the target audio data includes the first-type instruction; and extract the lip motion information of the in-vehicle members in the N positions in the vehicle cabin from the image data in the vehicle cabin. In this embodiment of the present invention, that the processor extracts the lip motion information of the members in the N positions in the vehicle from the image data in the vehicle cabin may be specifically that the processor recognizes the N face areas in the video data based on a facial recognition algorithm, extracts a lip motion video or extracts a video frame sequence through sampling in each of the N face areas, and determines the lip motion information of the N members based on the lip motion video or the video frame sequence in each face area. The image data is usually obtained through collection by one or more cameras in the vehicle, and there may be a plurality of types of the cameras.

In a possible implementation, the processor is further configured to extract the lip motion information of the in-vehicle members in the N positions in the vehicle cabin from the image data in the vehicle cabin when more than one in-vehicle member is recognized. In a specific implementation process of this embodiment of the present invention, to avoid a waste of computing resources, after the first instruction type is recognized, the processor determines a quantity of people in the vehicle cabin based on the obtained in-vehicle image data. Lip motion information does not need to be extracted when there is only one person in the vehicle cabin, and lip motion information of persons in the positions in which the persons take only when there is more than one person.

In a possible implementation, that the processor matches the first-type instruction with the lip motion information of the in-vehicle members in the N positions in the vehicle cabin, and obtains a target position based on a matching result between the lip motion information of the in-vehicle members in the N positions and the first-type instruction is specifically: the processor obtains, based on the first-type instruction and the lip motion information of the N in-vehicle members located in the vehicle cabin, a matching degree between lip motion information of an in-vehicle member in each of the N positions and the instruction information, where N is an integer greater than 1; and uses, as the target position, a position of an in-vehicle member corresponding to lip motion information with the highest matching degree.

The matching degree can be obtained by the processor by using different target matching models. The target feature matching model is a feature matching model obtained through training by using lip motion information of a training user and one or more pieces of speech information (the speech information may be a speech waveform sequence or text information corresponding to a speech) as input and matching degrees between the lip motion information of the training user and the M pieces of speech information as M labels. Training of a model is usually performed on a cloud side and is independent of using of the model. That is, training of the model is performed on a device, after training is complete, the model is sent to a device that needs to perform instruction matching for running and using.

In a model training manner in this embodiment of the present invention, model inference manners vary based on different training sample data. When a plurality of groups of lip motion information, for example, five pieces of lip motion information, are used for input, the five pieces of lip motion information and each of the M pieces of speech information are constructed into M groups of samples as input, matching degrees between the five pieces of lip motion information and the speech information in the sample are used as output, and label information is a target output result of training. The model obtained through training also uses the five pieces of lip motion information and the target instruction information as input during inference. When there are fewer than five persons in the vehicle, lip information in a vacant position can be used as a default value for input, for example, an all-zero sequence, and a matching degree corresponding to the instruction information is output. Alternatively, a single piece of lip motion information and the speech information can be used as a group of samples, and a matching label is a target training result for training. When a model obtained through such training performs inference, a lip motion instruction of each member in the vehicle and the instruction information need to be used as input, and matching degrees corresponding to members in the plurality of positions are separately obtained.

In a possible implementation, the processor is further configured to generate a correspondence between the lip motion information of the in-vehicle members in the N positions and the N positions; and that the processor uses, as the target position, a position of an in-vehicle member corresponding to lip motion information with the highest matching degree includes: the processor obtains the target lip motion information with the highest matching degree; and determines, based on the correspondence between the lip motion information of the in-vehicle members in the N positions and the N positions, the position corresponding to the target lip motion information as the target position.

That the processor generates a correspondence between the lip motion information of the in-vehicle members and the positions may be recognizing a member relationship in each position by collecting an image in the vehicle, and then mapping the lip motion information of each member to the position relationship, where the image data may be a same image extracted from lip information, or may be from an independent collection process.

In a possible implementation, the processor generates a correspondence between the lip motion information of the in-vehicle members in the N positions and identities of the in-vehicle members in the N positions; and that the processor uses, as the target position, a position of an in-vehicle member corresponding to lip motion information with the highest matching degree includes: the processor obtains the target lip motion information with the highest matching degree; determines the target in-vehicle member based on the correspondence between the lip motion information of the in-vehicle members in the N positions and the identities of the in-vehicle members in the N positions; and determines position information of the target in-vehicle member as the target position, where the position information of the target in-vehicle member is determined based on data from a sensor in the vehicle.

The first-type instruction mentioned in this embodiment of the present invention may be a control instruction in the vehicle cabin, and is mainly applicable to an instruction interaction scenario in which the position information needs to be recognized in the vehicle cabin to determine the target area for executing the instruction. An in-vehicle user sometimes provides specific position information when executing a speech instruction, for example, closing a vehicle window in a right rear seat. In this case, the processor can directly recognize the target position corresponding to the instruction. Therefore, in a possible implementation, when the processor recognizes that an obtained instruction is such type of instruction that has the specific position information, the processor determines that the instruction is not the first-type instruction. The first-type instruction may be an instruction that needs to be executed by distinguishing position areas but the instruction does not include position area information.

According to a fourth aspect, an embodiment of the present invention provides a speech instruction control device, including a processor. The processor is configured to: obtain a first-type instruction and lip motion information of an in-vehicle member located in a first position in a vehicle, where the first-type instruction is obtained based on target audio data collected in a vehicle cabin, the lip motion information of the in-vehicle member in the first position is obtained when the second-type instruction is recognized from the target audio data, and the target time period is a time period corresponding to the second-type instruction in the audio data; match the second-type instruction with the lip motion information of the in-vehicle member in the first position, to obtain a matching result; and when determining, based on the matching result, that the second-type instruction matches the lip motion information of the in-vehicle member in the first position, send indication information indicating to execute the second-type instruction.

This embodiment of the present invention may be applied to refined speech instruction control in the vehicle cabin. When it is recognized that a speech instruction is an instruction that can be executed only after an identity or permission of an instruction sender is determined, for example, a running control instruction of a vehicle, or another instruction related to an operation on privacy information, such as switching a driving mode, controlling a driving direction, and viewing historical call data, based on a special environment of the vehicle, a member of a driver's seat usually has the highest permission by default. Therefore, when obtaining the instruction that needs to confirm the identity of the sender, the vehicle obtains lip motion information of the member in a specific position (for example, the driver's seat) and the recognized specific instruction information to determine whether the instruction is sent by the member at the driver's seat, so that operation control can be performed on the specific position area in a targeted manner. The speech control device processes video data and analyzes a matching degree between a partial feature of the video data and instruction information. Therefore, the device may be a local device, for example, an intelligent vehicle-mounted device, an intelligent vehicle-mounted chip, a vehicle-mounted system including a camera and a microphone, an intelligent vehicle, or may be a cloud processor on a cloud side. In addition to collecting the lip motion information of the member in the driver's seat, the processor may also perform collection in a targeted manner based on members in one or more positions preset by a system or manually set; and obtain lip motion information of a person in a corresponding position for matching analysis when such an instruction is recognized.

In a possible implementation, the first position is a driver's seat.

In a possible implementation, the second-type instruction is a vehicle running control instruction.

The device in this embodiment of the present invention is applicable to a scenario of a vehicle with any quantity of people, and in particular, is applicable to a scenario in which an instruction is recognized and determining is performed when there are a plurality of members in the vehicle and the plurality of people are speaking at the same time. In this case, the processor can accurately determine, with reference to obtained in-vehicle position distribution information and matching between the lip motion information and the instruction information, whether the speech instruction is sent by the member in the specific position, and further determine whether the instruction is executed. The matching manner may be obtaining a plurality of members (including the member in the first position) in the vehicle for matching, and determining whether the member in the first position has the highest matching degree; or may be obtaining only the member in the first position for matching, and determining that a result is matching when a matching degree reaches a threshold, and the instruction may be executed.

In an embodiment of determining whether an instruction is the second-type instruction, a case in which the processor needs to determine the specific position is for a scenario in which only a member in a specific position has permission to execute such type of instruction. For example, the second-type instruction is usually a vehicle control instruction, to prevent misoperation, such type of instruction is usually set only for the member in the specific position such as the driver's seat that has a capability of performing vehicle running control by using a speech. A common implementation is as follows: The processor obtains the lip motion information of the user at the driver's seat for matching with the second instruction information, and when the result is matching, determines that the second-type instruction is sent by the user at the driver's seat, and executes the second-type instruction. It is usually considered by default that the user at the driver's seat usually has permission to control the vehicle. It may be manually set that a passenger in another position has the speech control permission, and the first position is also the another position in the vehicle.

In a possible implementation, that the processor obtains a second-type instruction and lip motion information of an in-vehicle member located in a first position in a vehicle is specifically: the processor obtains the target audio data in the vehicle cabin; obtains image data in the vehicle cabin when it is recognized that the target audio data includes the second-type instruction; and extracts the lip motion information of the in-vehicle member in the first position from the image data in the vehicle cabin.

In an implementation process of the foregoing solution, that the processor matches the second-type instruction with the lip motion information of the in-vehicle member in the first position, to obtain a matching result is specifically: the processor determines the matching result between the second-type instruction and the lip motion information of the in-vehicle member in the first position based on a preset threshold and a matching degree between the second-type instruction and the lip motion information of the in-vehicle member in the first position.

The second-type instruction in this embodiment of the present invention may be a speech waveform sequence extracted from the audio data or text instruction information recognized based on the audio data. Lip motion information of an in-vehicle member is an image sequence of lip motion of the in-vehicle member in the target time period.

In a possible implementation, the processor is further configured to: when the audio data includes the second-type instruction, obtain image data of in-vehicle members in other N positions in the vehicle; and extract, from the image data of the in-vehicle members in the other N positions in the vehicle, lip motion information of the in-vehicle members in the other N positions in the vehicle in the target time period; that the processor matches the second-type instruction with the lip motion information of the in-vehicle member located in the first position in the vehicle, to obtain a matching result is specifically: the processor matches the second-type instruction with the lip motion information of the in-vehicle member located in the first position in the vehicle and the lip motion information of the in-vehicle members in the N positions, to obtain matching degrees between lip motion information of $(N + 1)$ in-vehicle members and the second-type instruction; and obtains lip motion information with the highest matching degree; and that when it is determined, based on the matching result, that the second-type instruction matches the lip motion information of the in-vehicle member located in the first position in the vehicle, the processor sends indication information indicating to execute the second-type instruction is specifically: when the lip motion information with the highest matching degree is the lip motion information of the in-vehicle member located in the first position in the vehicle, the processor sends the indication information indicating to execute the second-type instruction.

In this embodiment of the present invention, the lip motion information of the member in the position in the vehicle is extracted from the video data of the member in the position in the vehicle. A specific method is recognizing a plurality of face areas in the video data based on a facial recognition algorithm, extracting a lip motion video in each of the plurality of face areas, and determining, based on the lip motion video in each face area, lip motion information corresponding to each face.

According to a fifth aspect, an embodiment of the present invention provides a chip system. The chip system includes at least one processor, a memory, and an interface circuit. The memory, the interface circuit, and the at least one processor are interconnected through a line, and the at least one memory stores instructions. The instructions are executed by the processor to implement the method in any one of the first aspect or the second aspect.

According to a sixth aspect, an embodiment of the present invention provides a computer-readable storage medium. The computer-readable medium is configured to store program code, and the program code includes a method in any one of the first aspect or the second aspect.

According to a seventh aspect, an embodiment of the present invention provides a computer program. The computer program includes instructions, and when the computer program is executed, the computer program is used to implement any method in the first aspect or the second aspect.

## BRIEF DESCRIPTION OF DRAWINGS

To describe the technical solutions in embodiments of this application or in the background more clearly, the following briefly describes the accompanying drawings for describing embodiments of this application or the background.

FIG. 1 is a schematic diagram of a scenario of multi-person interaction in a vehicle according to an embodiment of the present invention;

FIG. 2 is a schematic diagram of a scenario of multi-person interaction in a vehicle according to an embodiment of the present invention;

FIG. 3 shows a system architecture 100 according to an embodiment of the present invention;

FIG. 4 is a schematic diagram of a convolutional neural network according to an embodiment of the present invention;

FIG. 5 is a schematic flowchart of a neural network training method according to an embodiment of the present invention;

FIG. 6 is an example diagram of a sound waveform according to an embodiment of the present invention;

FIG. 7A is a speech instruction matching method according to an embodiment of the present invention;

FIG. 7B is a speech instruction matching method according to an embodiment of the present invention;

FIG. 8 is a schematic diagram of a cloud interaction scenario according to an embodiment of the present invention;

FIG. 9 is a flow chart of a method according to an embodiment of the present invention;

FIG. 10 is a flow chart of a method according to an embodiment of the present invention;

FIG. 11 is a flow chart of a method according to an embodiment of the present invention;

FIG. 12 is a flow chart of a method according to an embodiment of the present invention;

FIG. 13 is a schematic diagram of a structure of an instruction control apparatus according to an embodiment of the present invention;

FIG. 14 is a schematic diagram of a structure of a neural network training apparatus according to an embodiment of the present invention; and

FIG. 15 shows another instruction control system according to an embodiment of the present invention.

## DESCRIPTION OF EMBODIMENTS

The following describes embodiments of the present invention with reference to the accompanying drawings in embodiments of the present invention.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network, for example, the internet interacting with another system by using the signal).

Some terms in this application are first described, so as to help persons skilled in the art has a better understanding.

(1) Bitmap (Bitmap): The bitmap is also referred to as a raster graphic (Raster graphic) or a dot matrix, and is an image represented by a pixel array (Pixel-array/Dot-matrix dot matrix). Based on a bit depth, the bitmap may be classified as a 1-bit, 4-bit, 8-bit, 16-bit, 24-bit, or 32-bit image. When more bits of information are used by each pixel, it indicates that more colors are available, a color is presented more vivid, and correspondingly a data amount is larger. For example, a pixel bitmap with a bit depth of 1 has only two possible values (black and white), and therefore the pixel bitmap is also referred to as a binary bitmap. An image with a bit depth of 8 has $2^8$ (namely, 256) possible values. A grayscale mode image with the bit depth of 8 has 256 possible gray values. An RGB image includes three color channels. Each channel of the RGB image with 8 bits/channel has 256 possible values. This means that the image has at least 16 million possible color values. The RGB image with 8 bits/channel (bpc) is sometimes referred to as a 24-bit image (8 bits x 3 channels = 24 bits of data/pixel). [2] A bitmap represented by 24 bits of combined RGB data is usually referred to as a true color bitmap.

(2) Speech recognition (Automatic Speech Recognition, ASR) technology: The speech recognition is also referred as automatic speech recognition, and aims to convert words in audio of a person into computer-readable input such as keys, binary codes, or character sequences.

(3) Voiceprint (Voiceprint): The voiceprint is a sound wave spectrum that is displayed by an electrical acoustic instrument and that carries language information. The voiceprint is a biological feature that includes more than 100 feature dimensions such as a wavelength, a frequency, and intensity. Voiceprint recognition is a technology in which an unknown sound is recognized by analyzing one or more features of one or more speech signals. Briefly, voiceprint recognition is a technology used to recognize whether a sentence is spoken by a specific person. An identity of a speaker may be determined based on voiceprint, and therefore a targeted answer can be provided.

(4) Mel-frequency cepstrum coefficient (Mel-Frequency Cepstrum Coefficient, MFCC): In the sound processing field, mel-frequency cepstrum (Mel-Frequency Cepstrum) is a linear transform of a logarithmic power spectrum based on a nonlinear mel scale (mel scale) of a sound frequency. The Mel-frequency cepstrum coefficient (MFCC) is widely applied to a speech recognition function.

(5) Multi-way cross-entropy loss (Multi-way cross-Entropy Loss): A cross-entropy loss describes a distance between two probability distributions. A lower cross-entropy loss indicates a shorter distance between the two probability distributions.

(6) Neural network:

The neural network may include neurons. The neuron may be an operation unit for which $x_s$ and an intercept of 1 are used as input. Output of the operation unit may be as follows:

$$h_{W,b}(x) = f(W^T x) = f\left(\sum_{s=1}^{n} W_s x_s + b\right) \quad (1\text{-}1).$$

s=1, 2, ..., or n, n is a natural number greater than 1, $W_s$ is a weight of xs, b is bias of the neuron, and *f* is an activation function (activation function) of the neuron, and is used to introduce a non-linear feature into the neural network to convert an input signal in the neuron into an output signal. The output signal of the activation function may be used as input of a next convolutional layer. The activation function may be a sigmoid function. The neural network is a network formed by connecting many single neurons together. To be specific, output of a neuron may be input of another neuron. Input of each neuron may be connected to a local receptive field of a previous layer to extract a feature of the local receptive field. The local receptive field may be an area including several neurons.

(7) Deep neural network:

The deep neural network (deep neural network, DNN) is also referred to as a multilayer neural network, and may be understood as a neural network having many hidden layers. There is no special metric for "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron in an i$^{th}$ layer is definitely connected to any neuron in an (i + 1)$^{th}$ layer. Although the DNN seems to be complex, the DNN is actually not complex in terms of work at each layer, and is simply expressed as the following linear relationship expression: $\vec{y} = \alpha(W\vec{x} + b)$, where $\vec{x}$ is an input vector, $\vec{y}$ is an output vector, b is a bias vector, W is a weight matrix (also referred to as a coefficient), and $\alpha()$ is an activation function. At each layer, the output vector $\vec{y}$ is obtained by performing such a simple operation on the input vector $\vec{x}$. Because there are many layers in the DNN, there are also many coefficients W and bias vectors b. Definitions of these parameters in the DNN are as follows: The coefficient W is used as an example. It is assumed that in a three-layer DNN, a linear coefficient from the fourth neuron at the second layer to the second neuron at the third layer is defined as $W_{24}^{3}$. The superscript 3 indicates a layer at which the coefficient W is located, and the subscript corresponds to an output third-layer index 2 and an input second-layer index 4. It is concluded that, a coefficient from a k$^{th}$ neuron at an (L - 1)$^{th}$ layer to a j$^{th}$ neuron at an L$^{th}$ layer is defined as $W_{jk}^{L}$. It should be noted that there is no parameter W at the input layer. In the deep neural network, more hidden layers make the network more capable of describing a complex case in the real world. Theoretically, a model with more parameters is more complex, and has a larger "capacity", which means that the model can complete a more complex learning task. Training the deep neural network is a process of learning a weight matrix, and a final objective of the training is to obtain a weight matrix of all layers of the trained deep neural network (a weight matrix formed by vectors W at many layers).

(8) Convolutional neural network:

The convolutional neural network (CNN, convolutional neuron network) is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected to only some neurons at a neighboring layer. A convolutional layer usually includes several feature maps, and each feature map may include some neurons arranged in a rectangle. Neurons of a same feature map share a weight, and the shared weight herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

(9) Loss function:

In a process of training a deep neural network, because it is expected that output of the deep neural network maximally approximates a value that actually needs to be predicted, a current predicted value of the network and an actually desired target value may be compared, and then a weight vector of each neural network layer is updated based on a difference between the current predicted value and the target value (certainly, there is usually a process before the first update, to be specific, parameters are preconfigured for all layers of the deep neural network). For example, if the predicted value of the network is large, the weight vector is adjusted to lower the predicted value until the deep neural network can predict the actually desired target value or a value that more approximates the actually desired target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(10) Back propagation algorithm:

A convolutional neural network may refine a value of a parameter in the convolutional neural network in a training process by using an error back propagation (back propagation, BP) algorithm, so that a reconstruction error loss of the convolutional neural network is increasingly smaller. Specifically, an input signal is transferred forward until an error loss is caused during output, and the parameter in the convolutional neural network is updated by using back propagation error loss information, to make the error loss converge. The back propagation algorithm is back propagation motion dominated by an error loss, and is intended to obtain a parameter, such as a weight matrix, of an optimal convolutional neural network.

(11) Pixel value:

A pixel value of an image may be a red green blue (RGB) color value, and the pixel value may be a long integer representing a color. For example, the pixel value is 256*Red + 100*Green + 76Blue, where Blue represents a blue component, Green represents a green component, and Red represents a red component. In each color component, a smaller value indicates lower brightness, and a larger value indicates higher brightness. For a grayscale image, a pixel value may be a grayscale value.

First, to facilitate understanding of embodiments of the present invention, a technical problem to be specifically resolved in this application is further analyzed and provided. In the conventional technology, there may be a plurality of implementations for recognizing a position of a sender of a detected speech instruction in a multi-person scenario in a vehicle, for example, may be implemented through voiceprint recognition and/or sound source localization in a vehicle cabin. The following gives examples of two commonly used solutions.

Solution 1

Voiceprint (Voiceprint) is a sound wave spectrum that is displayed by an electrical acoustic instrument and that carries language information. The voiceprint is a biological feature that includes more than 100 feature dimensions such as a wavelength, a frequency, and intensity. Voiceprint recognition is a technology in which an unknown sound is recognized by analyzing one or more features of one or more speech signals. Briefly, voiceprint recognition is a technology used to recognize whether a sentence is spoken by a specific person. An identity of a speaker may be determined based on voiceprint, and therefore a targeted answer can be provided. Two phases are mainly included: a registration phase and a verification phase. In the registration phase, a corresponding voiceprint model is established based on a voiceprint feature of a speech of a speaker. In the verification phase, the speech of the speaker is received, the voiceprint feature of the speech is extracted, and the voiceprint feature is matched with the voiceprint model established in the registration phase. If the matching succeeds, it indicates that the speaker is the originally registered speaker.

Solution 2

A sound source localization technology is a technology in which acoustics and electronic apparatuses are used to receive target sound field information to determine a position of a target sound source. During sound source localization by a microphone array, the microphone array is used to pick up sound source signals, analyze and process a plurality of channels of sound signals, and extract one or more sound source planes or spatial coordinates in a space domain, namely, obtain the position of the sound source. Further, a beam of the microphone array is controlled to aim at a speaker.

Disadvantages of applying Solution 1 and Solution 2 to analysis of the position of the instruction sender in the vehicle cabin

In application of voiceprint recognition, voiceprint information of a passenger needs to be stored in advance. A person who has not performed voiceprint recognition and recording cannot be recognized. A voice of a same person is volatile; and the vehicle is in a multi-person environment, and when the plurality of people speak at the same time, a voiceprint feature is difficult to extract, or a loud environment noise interferes with recognition.

In the sound source localization technology, the vehicle is a relatively narrow and crowded space, especially a space distance between passengers in a back row is very close, and members may shake or tilt when speaking. The foregoing factors may cause a decrease in accuracy of sound source localization. In addition, a case in which the plurality of people speak at the same time in the vehicle cabin usually occurs, and accuracy of sound source localization is also affected in this case.

In conclusion, if the foregoing two solutions are applied to recognition of the position of the speech instruction sender in the vehicle, and in particular, applied to recognition of the position of the instruction sender in an in-vehicle scenario in which the plurality of persons make sounds at the same time, the specific position of the in-vehicle member corresponding to the collected instruction cannot be accurately recognized. This cannot implement more accurate and effective human-machine interaction. Therefore, a technical problem to be resolved in this application includes the following aspects: When there are a plurality of users in a vehicle cabin, when a specific type of instruction is collected, how to accurately determine a specific position of a speech sender and specifically instruct the corresponding instruction.

A speech matching method provided in embodiments of this application can be applied to a human-machine interaction scenario of an intelligent vehicle. The following gives examples of human-machine interaction scenarios to which the speech instruction control method in this application is applied. The following two scenarios may be included.

In-vehicle interaction scenario 1

Generally, a plurality of speakers are distributed in a vehicle, and are respectively distributed in different positions in a vehicle cabin. The plurality of speakers may provide music of different volumes for passengers in different areas in the vehicle according to requirements of passengers and a driver. For example, if a passenger A wants to rest, a quiet environment is required, and therefore a volume of a speaker in the area where the passenger A is located may be adjusted to the lowest level; and if a passenger B needs to listen to music normally, a volume of a speaker in the area where the passenger B is located may be set to a normal value. Alternatively, the plurality of speakers may also provide different audio playing content for users in different areas. For example, if a child is in a back row, a fairy tale may be selected to be played for the child in the back row; and the driver and a co-driver in a front row want to listen to pop music, pop music can be played on a speaker in the front row.

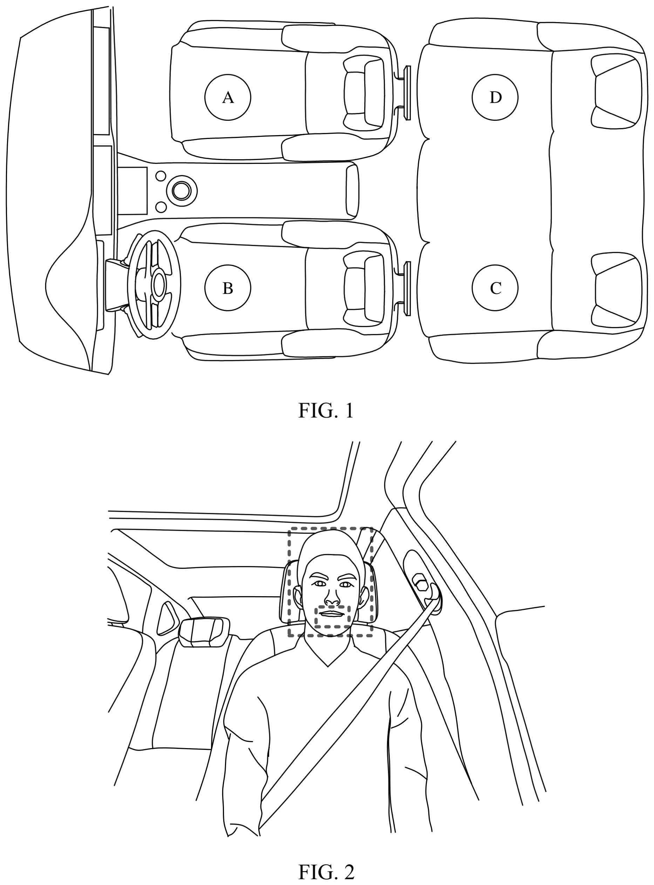

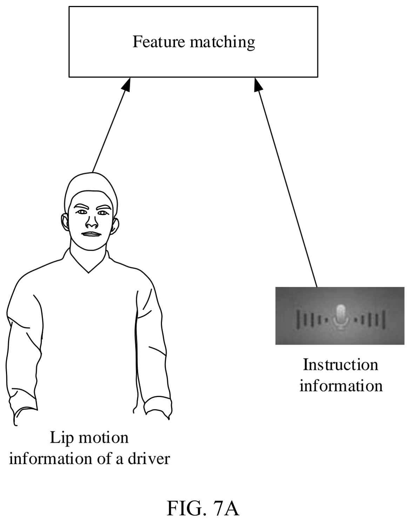

However, embodiments of the present invention can provide a member in the vehicle cabin with the method for controlling a speaker through a speech in an area in which a member who sends the speech instruction is located. For example, as shown in FIG. 1, when there are four persons A, B, C, and D in the vehicle who respectively take a driver's seat, a co-driver's seat, a seat in a left back row, and a seat in a right back row, in this case, the member D says: "Turn down the volume". In this case, as shown in FIG. 7A, video information and audio instruction information of a plurality of in-vehicle members may be separately obtained by using a camera and a microphone in the vehicle cabin, and lip motion information of the in-vehicle members is matched with a feature of the instruction information to determine a speaking member and control a speaker at a position of the speaking member according to the instruction sent by the speaking member and the position. If it is recognized that the speaking member is the right back passenger, the speaker in a right back area is turned down.

If a speech instruction of the member C is "Play song **** to me", video information and audio instruction information of the in-vehicle members may also be separately obtained by using a camera and a microphone in the vehicle cabin, and lip motion information of the in-vehicle members A, B, C, and D and the speech information are processed and analyzed to determine that a speaking member is the member C, and control, according to the instruction sent by the speaking member C and the position of the speaking member, a speaker at the position of the speaking member. If it is recognized that the speaking member C is the left back passenger, the left back speaker is controlled to play the song ****.

A similar application scenario may further include: A plurality of air exhaust vents of an air conditioner are distributed in the vehicle, and are respectively distributed in different positions in the vehicle cabin. The plurality of air exhaust vents of the air conditioner may provide different air volumes for passengers in different areas in the vehicle according to requirements of passengers and a driver, thereby implementing differentiated adjustment of temperatures in some areas. For example, if a temperature of a passenger A is lower, an air volume in an area where the passenger A is located may be selected to be increased; and a passenger B feels cold, an air exhaust direction of an air exhaust vent in an area where the passenger B is located may be adjusted to not directly blow to the person or an air volume may be reduced by using an instruction. Alternatively, when an angle and height of a seat in the vehicle can be adjusted independently, passengers in different areas also adjust parameters of the seats according to their own requirements. In the foregoing scenarios, convenient control can be performed by using the speech recognition method in embodiments of the present invention. Similarly, video information and audio instruction information of in-vehicle members may be separately obtained by using a camera and a microphone in the vehicle cabin, and lip motion information of the in-vehicle members and the voice information are processed and analyzed to determine a speaking member and control, based on an instruction sent by the speaking member and a position of the speaking member, an air exhaust direction or an air volume of an air exhaust vent of an air conditioner at the position of the speaking member, or a back angle of a seat or height of a seat.

In-vehicle interaction scenario 2

In addition to control on in-vehicle setting mentioned in the foregoing scenarios in the speech instruction in the vehicle cabin, because control of some in-vehicle facilities needs to distinguish a target area in which a specific instruction is implemented, a position at which a member sends the speech instruction needs to be recognized. In addition to the foregoing scenarios, when a driver needs to perform running control of the vehicle, the driver may also choose to control running of the vehicle through a speech. In this speech instruction interaction scenario, whether a current vehicle control instruction is sent by a member at a driver's seat also needs to be recognized.

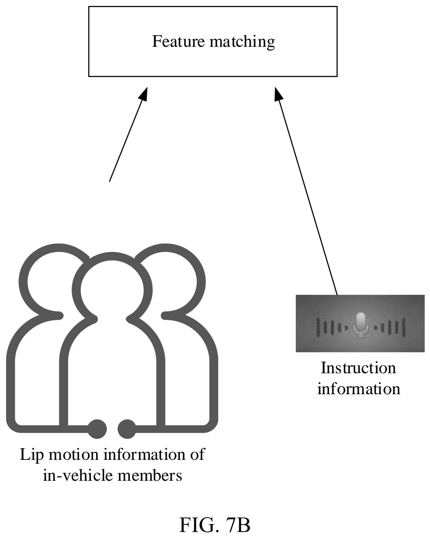

Therefore, embodiments of the present invention may provide a speech instruction permission recognition method for vehicle running control. For example, when there are a plurality of persons in a vehicle, if a speech instruction related to vehicle running control is received, for example, "Switch to an automatic driving mode", a vehicle system considers by default that only a member at a driver's seat has permission to execute such an instruction. In this case, the vehicle needs to obtain lip motion information of the member at the driver's seat as shown in FIG. 2, performs feature matching on the obtained lip motion information of the member at the driver's seat and speech instruction information as shown in FIG. 7B, to obtain a matching degree between the lip motion information and the instruction information, and determines, based on the matching degree, whether the instruction is the speech instruction sent by the member at the driver's seat, and whether to execute the instruction.

Specifically, determining whether the instruction is the speech instruction sent by the member at the driver's seat may also be obtaining lip motion information of a plurality of in-vehicle members, analyzing matching degrees between the lip motion information and the instruction information, checking whether a matching degree corresponding to lip motion information of the member at the driver's seat is the highest, and further determining whether to execute the instruction.

It may be understood that the application scenarios in the vehicle cabins in FIG. 1 and FIG. 2 are merely several example implementations in embodiments of the present invention. Embodiments of the present invention may be specifically implemented in various flexible implementations. For example, in Scenario 1, the lip motion information of all the in-vehicle members does not need to be obtained, and only lip motion information of some members may be obtained based on a specific instruction type, for example, when only a front seat can be adjusted, only lip motion information of members in the front row is obtained when an instruction for adjusting a seat is detected. In scenario 2, the lip motion information of the member at the driver's seat does not need to be obtained. When the vehicle considers, by default, that a vehicle owner has the operation permission of the recognized instruction, a position of the vehicle owner is obtained and lip motion information of the vehicle owner is extracted, to determine whether the instruction is sent by the vehicle owner.

The instruction information is matched with the lip motion information of the in-vehicle member, a model may be obtained in a model training manner, and the lip motion information and the instruction information are input to output a corresponding matching degree. Therefore, the following describes the method provided in this application on a model training side and a model application side.

Any neural network training method provided in this application relates to fusion processing of computer audition and vision, and may be specifically applied to a data processing method such as data training, machine learning, or deep learning, to perform symbolic and formal intelligent information modeling, extraction, preprocessing, training, and the like on training data (for example, lip motion information of a training user and M pieces of speech information in this application). A trained target feature matching model is finally obtained. In addition, the trained target feature matching model can be used in any speech matching method provided in this application, and input data (for example, the to-be-recognized speech information and the lip motion information of N users in this application) may be input into the trained target feature matching model to obtain output data (for example, matching degrees between the lip motion information of the N users and the to-be-recognized speech information in this application). It should be noted that the neural network training method and the speech matching method that are provided in embodiments of this application are inventions generated based on a same concept, and may also be understood as two parts of a system or two phases of an entire process, for example, a model training phase and a model application phase.

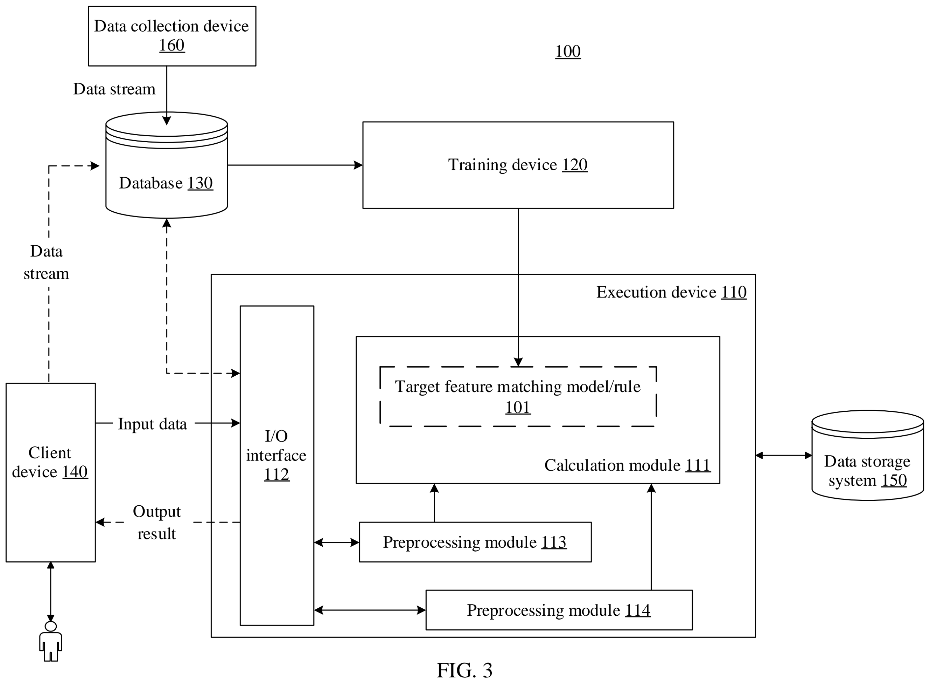

FIG. 3 shows a system architecture 100 according to an embodiment of the present invention. As shown in the system architecture 100, a data collection device 160 is configured to collect training data. In this application, the data collection device 160 may include a microphone and a camera. In this embodiment of the present invention, the training data (namely, input data on a model training side) may include video sample data and speech sample data, namely, lip motion information of a training user and M pieces of speech information respectively in this embodiment of the present invention. The M pieces of speech information may include speech information matching the lip motion information of the training user. For example, the video sample data is image sequences of lip motion when a training user sends a speech: "It is a very nice day today. Where shall we go for an outing?", and the speech sample data includes a speech waveform sequence (used as a positive audio sample) of the speech "It is a very nice day today. Where shall we go for an outing?" sent by the training user and (M - 1) other speech waveform sequences (used as a negative audio sample). The video sample data and the audio sample data may be collected by the data collection device 160, or may be downloaded from a cloud. FIG. 3 merely shows an example architecture, and does not constitute a limitation. Further, the data collection device 160 stores the training data into a database 130. A training device 120 obtains a target feature matching model/rule 101 (the target feature matching model 101 herein is the target feature matching model in embodiments of the present invention, for example, a model obtained through training in the foregoing training phase, or a neural network model used for feature matching between a speech and a lip motion trajectory) through training based on the training data maintained in the database 130.

The following describes in more detail how the training device 120 obtains the target feature matching model/rule 101 based on the training data. The target feature matching model/rule 101 can be used to implement any speech matching method provided in embodiments of the present invention, that is, after related preprocessing is performed on the audio data and the image data that are obtained by the data collection device 160, the audio data and the image data are input into the target feature matching model/rule 101, to obtain matching degrees/confidence between image sequence features of lip motion of a plurality of users and a to-be-recognized speech feature. The target feature matching model/rule 101 in this embodiment of the present invention may be specifically a spatio-temporal convolutional network (STCNN). In this embodiment provided in this application, the spatio-temporal convolutional network may be obtained by training a convolutional neural network. It should be noted that, in actual application, the training data maintained in the database 130 is not necessarily all collected by the data collection device 160, and may be received from another device. It should further be noted that the training device 120 may not necessarily perform training for the target feature matching model/rule 101 totally based on the training data maintained in the database 130, or may obtain training data from a cloud or another place for model training. The foregoing descriptions should not be construed as a limitation on embodiments of the present invention.

As shown in FIG. 3, the target feature matching model/rule 101 is obtained through training by the training device 120. The target feature matching model/rule 101 may be referred to as an audio-visual cross convolutional neural network (V&A Cross CNN)/a spatio-temporal convolutional neural network in this embodiment of the present invention. Specifically, the target feature matching model provided in this embodiment of the present invention may include a first model, a second model, and a third model. The first model is used to extract a speech feature. The second model is used to extract image sequence features of lip motion of a plurality of users (N users in this application). The third model is used to calculate matching degrees/confidence between the speech feature and the image sequence features of the N users. In the target feature matching model provided in this embodiment of the present invention, the first model, the second model, and the third model each may be a convolutional neural network. In other words, it may be understood that the target feature matching model/rule 101 may be considered as an entire spatio-temporal convolutional neural network, and the spatio-temporal convolutional neural network further includes a plurality of independent networks, for example, the first model, the second model, and the third model.

In addition to the foregoing model training and execution manners, embodiments of the present invention may be implemented by using another model training and execution solution.

Same as a sample data collection source of the training method described above, in this embodiment of the present invention, the training data (namely, input data on the model training side) may include video sample data and speech sample data, namely, lip motion information of a training user and M pieces of speech information respectively in this embodiment of the present invention. The lip motion information includes lip motion information corresponding to various speech instructions of different users, and the speech information includes speech instruction statements sent by different users. Optionally, some negative samples may also be included, namely, lip motion information corresponding to a statement that is not a speech instruction, and speech information that is not a speech instruction. The speech instruction herein means that a vehicle-mounted system can recognize and make response to corresponding speech information, and may be a keyword, or may be a complete sentence. The video sample data and the audio sample data may be collected by the data collection device 160, may be downloaded from a cloud, or provided by a third-party data holder. Further, the data collection device 160 stores the training data into the database 130. The training device 120 obtains the target feature matching model/rule 101 (the target feature matching model 101 herein is the target feature matching model in embodiments of the present invention, for example, the model obtained through training in the foregoing training phase, or the neural network model used for feature matching between the speech and the lip motion trajectory) through training based on the training data maintained in the database 130.

The following describes in more detail how the training device 120 obtains the target feature matching model/rule 101 based on the training data. The target feature matching model/rule 101 can be used to implement any speech matching method provided in embodiments of the present invention, that is, after related preprocessing is performed on the audio data and the image data that are obtained by the data collection device 160, the audio data and the image data are input into the target feature matching model/rule 101, to obtain the matching degrees/confidence between the image sequence features of lip motion of the plurality of users and the to-be-recognized speech feature. The target feature matching model/rule 101 in this embodiment of the present invention may be specifically a convolutional network (CNN) in this embodiment provided in this application. It should be noted that, in actual application, the training data maintained in the database 130 is not necessarily all collected by the data collection device 160, and may be received from another device. It should further be noted that the training device 120 may not necessarily perform training for the target feature matching model/rule 101 totally based on the training data maintained in the database 130, or may obtain training data from a cloud or another place for model training. The foregoing descriptions should not be construed as a limitation on embodiments of the present invention.

As shown in FIG. 3, the target feature matching model/rule 101 is obtained through training by the training device 120. Specifically, the target feature matching model provided in this embodiment of the present invention may include a first model and a second model. The first model is used to perform matching on a speech instruction to recognize instruction information corresponding to the speech instruction, where the instruction information may be specifically an instruction identifier or a text feature of the instruction. The second model is used to: separately recognize, based on image sequence features of N users, a correspondence corresponding to a speech instruction corresponding to each piece of lip motion information, for example, an identifier of a corresponding instruction and a matching degree thereof that can be matched and output; and finally, output a target user that sends the speech instruction based on the instruction identifier corresponding to the speech instruction, the speech identifier corresponding to the lip motion information of each user, and the matching degree thereof. In the target feature matching model provided in this embodiment of the present invention, the first model and the second model each may be a CNN, an RNN, a DBN, a DNN, or the like.

The first model is trained by using a speech instruction as an instruction identifier (the identifier may be expressed as a code) corresponding to an input speech instruction as a label. The second model uses lip motion information of a user as input (the lip motion information may be specifically a lip motion image sequence feature, for example, a lip opening and closing amplitude sampled according to time is a vector sequence), and an instruction identifier corresponding to the lip motion information and a matching degree thereof as output, where the instruction identifier may be a code corresponding to the instruction, and the matching degree may be an output matching value. Whether a result is matching is determined based on the matching value. For example, if the value is greater than 0.5, the result is matching, and if the value is less than 0.5, the result is mismatching.

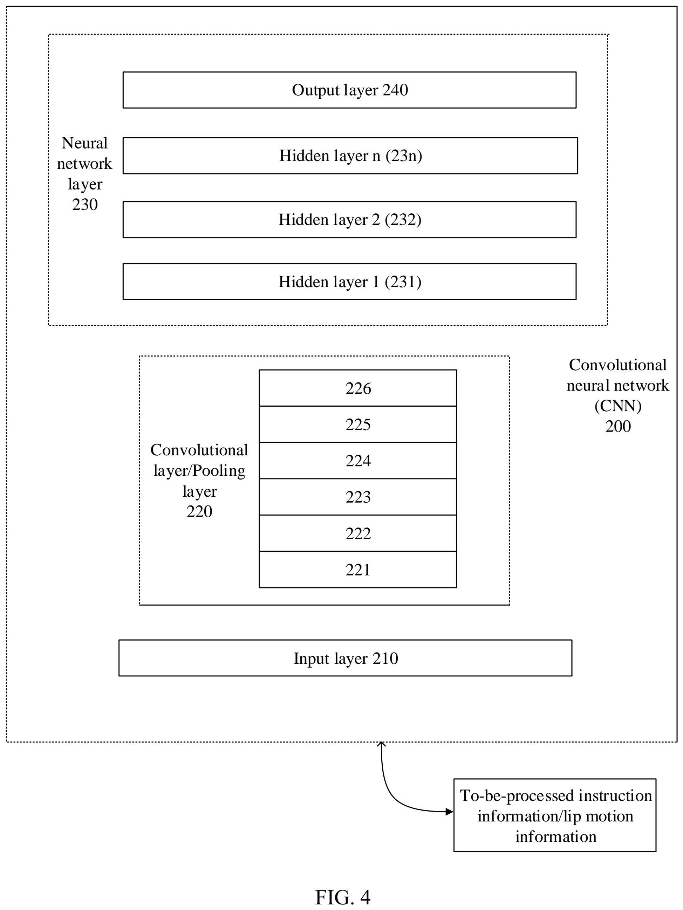

The target feature matching model/rule 101 obtained through training by the training device 120 may be applied to different systems or devices, for example, applied to an execution device 110 shown in FIG. 4. The execution device 110 may be a terminal such as a mobile phone terminal, a tablet computer, a notebook computer, an augmented reality (Augmented Reality, AR)/virtual reality (Virtual Reality, VR) device, a smart wearable device, a smart robot, a vehicle-mounted terminal, or an intelligent cockpit environment, or may be a server, a cloud, or the like. In FIG. 4, an I/O interface 112 is configured in the execution device 110, and is used to exchange data with an external device. A user may input data to the I/O interface 112 by using a client device 140 (the client device in this application may also include a data collection device such as a microphone and a camera). In this embodiment of the present invention, the input data (namely, input data on a model application side) may include: to-be-recognized speech information and lip motion information of N users, namely, a speech waveform sequence in a target time period and image sequences of lip motion of the corresponding users in the target time period included in lip motion information of users in the lip motion information of the N users in this embodiment of the present invention. For example, currently, when a specific person who sends speech information of "What's the weather like tomorrow? Where is suitable for an outing?" needs to be recognized from a group of persons, a speech waveform sequence corresponding to "What's the weather like tomorrow? Where is suitable for an outing?" and image sequences of lip motion corresponding to all the persons are used as input data. It may be understood that the input data herein may be input by the user, or may be provided by a related database, and varies according to a specific application scenario. This is not specifically limited in this embodiment of the present invention.

In this embodiment of the present invention, the client device 140 and the execution device 110 may be on a same device; and the data collection device 160, the database 130, and the training device 120 may also be on a same device as the execution device 110 and the client device 140. For example, this application is performed by a robot. After extracting audio data and image data collected by the client device 140 (including a microphone, a camera, and a processor) to obtain the to-be-recognized speech information and the lip motion information of the N users, the robot may further perform feature matching between the extracted speech information and the lip motion information by using the execution device 110 inside the robot, and finally output a result to the client device 140, so that the processor in the client device 140 obtains, through analysis, a target user to which the to-be-recognized speech information belongs in the N users. In addition, devices (the data collection device 160, the database 130, and the training device 120) on the model training side may be located in the robot or on a cloud. When the devices are located in the robot, it may be considered that the robot has a model training function or a model update and optimization function. In this case, the robot not only has a function of the model training side, but also has a function of the model application side. When the devices are located on the cloud, the robot has only the function of the model application side. Optionally, the client device 140 and the execution device 110 may not be on a same device, that is, the client device 140 (for example, a smartphone or an intelligent robot) may collect audio data and image data, and extract to-be-recognized speech information and lip motion information of N users, and the execution device 110 (for example, a cloud server or a server) may perform a process of performing feature matching between the to-be-recognized speech information and the lip motion information of the N users; or optionally, the client device 140 collects audio data and image data, and the execution device 110 extracts to-be-recognized speech information and lip motion information of N users and performs a process of performing feature matching between the to-be-recognized speech information and the lip motion information of the N users.

In a case shown in FIG. 3, the user may manually provide the input data. The input data may be manually provided on a screen provided by using the I/O interface 112. In another case, the client device 140 may automatically send the input data to the I/O interface 112. If it is required that the client device 140 needs to obtain authorization from the user to automatically send the input data, the user may set corresponding permission on the client device 140. The user may view, on the client device 140, the result output by the execution device 110. Specifically, the result may be displayed or may be presented in a form of a sound, an action, or the like. The client device 140 may also be used as a data collection end (for example, a microphone or a camera), to collect the input data that is to be input into the I/O interface 112 and the output result that is to be output from the I/O interface 112, as shown in the figure, use the input data and the output result as new sample data, and store the new sample data into the database 130. It is clear that the client device 140 may alternatively not perform collection. Instead, the I/O interface 112 directly stores, in the database 130 as new sample data, the input data that is input to the I/O interface 112 and the output result that is output from the I/O interface 112 in the figure.

A preprocessing module 113 is configured to preprocess the input data (for example, the speech data) received through the I/O interface 112. In this embodiment of the present invention, the preprocessing module 113 may be configured to preprocess the audio data, for example, extract the to-be-recognized speech information from the audio data.

A preprocessing module 114 is configured to preprocess the input data (for example, the image data) received through the I/O interface 112. In this embodiment of the present invention, the preprocessing module 114 may be configured to preprocess the image data, for example, extract the lip motion information of the N users corresponding to the to-be-recognized speech information from the image data.

In a process in which the execution device 110 preprocesses the input data, or in a process in which a computation module 111 in the execution device 110 performs related processing such as computation, the execution device 110 may invoke data, code, and the like in a data storage system 150 for corresponding processing, and may further store, into the data storage system 150, data, instructions, and the like that are obtained through corresponding processing. Finally, the I/O interface 112 returns the output result, for example, matching degrees between the lip motion information of the N users and the to-be-recognized speech information, or a target user ID with the highest matching degree in this embodiment of the present invention, to the client device 140. The client device 140 determines user information of the target user based on the matching degrees, and generates, based on the user information, a control instruction matching the user information.

It should be noted that the training device 120 may generate corresponding target feature matching models/rules 101 for different targets or different tasks based on different training data. The corresponding target feature matching models/rules 101 may be used to implement the foregoing targets or complete the foregoing tasks, so as to provide a required result to the user.

It should be noted that FIG. 4 is merely a schematic diagram of a system architecture according to an embodiment of the present invention. A position relationship between devices, components, modules, and the like shown in the figure does not constitute any limitation. For example, in FIG. 4, the data storage system 150 is an external storage device relative to the execution device 110, and in another case, the data storage system 150 may be alternatively disposed in the execution device 110.

Based on the description of the system architecture, the following describes a neural network model, namely, a convolutional neural network, from perspectives of model training and model application in embodiments of the present invention. The convolutional neural network CNN is a deep neural network with a convolutional structure, and is a deep learning (deep learning) architecture. The deep learning architecture performs a plurality of levels of learning at different abstract layers by using a machine learning algorithm. As the deep learning architecture, the CNN is a feed-forward (feed-forward) artificial neural network. Neurons in the feed-forward artificial neural network make response to an overlapping area in an image input to the CNN.

FIG. 4 is a schematic diagram of a convolutional neural network according to an embodiment of the present invention. The convolutional neural network (CNN) 200 may include an input layer 210, a convolutional layer/pooling layer 220, and a neural network layer 230. The pooling layer is optional.

Convolutional layer/Pooling layer 220

As shown in FIG. 4, the convolutional layer/pooling layer 120 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. In other words, output of a convolutional layer may be used as input for a following pooling layer, or may be used as input for another convolutional layer, to continue to perform a convolution operation.

Convolutional layer

The convolutional layer 221 is used as an example. The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolution output of a single depth dimension is generated by performing convolution with a single weight matrix. However, in most cases, a plurality of weight matrices of a same dimension rather than the single weight matrix are used. Output of the weight matrices is stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form output of the convolution operation.

In actual application, a lot of training needs to be performed to obtain weight values in these weight matrices. The weight matrices formed by using the weight values obtained through training may be used to extract information from the input image, to help the convolutional neural network 200 to perform correct prediction.

When the convolutional neural network 200 includes a plurality of convolutional layers, a relatively large quantity of general features are usually extracted at an initial convolutional layer (for example, 221). The general feature may also be referred to as a low-level feature. As a depth of the convolutional neural network 200 increases, a feature, for example, a high-level semantic feature, extracted at a subsequent convolutional layer (for example, 226) becomes more complex. A feature with higher-level semantics is more appropriate for a to-be-resolved problem.

Pooling layer

Because a quantity of training parameters usually needs to be reduced, the pooling layer usually needs to be periodically introduced after a convolutional layer. To be specific, for the layers 221 to 226 in the convolutional layer/pooling layer 220 shown in FIG. 4, one convolutional layer may be followed by one pooling layer, or a plurality of convolutional layers may be followed by one or more pooling layers. During image processing, the pooling layer is only used for reducing a space size of the image. The pooling layer may include an average pooling operator and/or a maximum pooling operator, to perform sampling on the input picture to obtain a picture with a relatively small size. The average pooling operator may compute a pixel value in the image within a specific range, to generate an average value. The maximum pooling operator may be used to select a pixel with a maximum value in a specific range as a maximum pooling result. In addition, similar to a case in which a size of a weight matrix in the convolutional layer should be related to a size of the image, an operator in the pooling layer should be also related to the size of the image. A size of a processed image output from the pooling layer may be less than a size of an image input to the pooling layer. Each pixel in the image output from the pooling layer represents an average value or a maximum value of a corresponding sub-area of the image input to the pooling layer.

Neural network layer 130

After processing performed at the convolutional layer/pooling layer 220, the convolutional neural network 100 is not ready to output desired output information. As described above, at the convolutional layer/pooling layer 220, only features are extracted, and parameters brought by the input image are reduced. However, to generate final output information (desired class information or other related information), the convolutional neural network 200 needs to use the neural network layer 230 to generate output of one desired class or a group of desired classes. Therefore, the neural network layer 230 may include a plurality of hidden layers (231, 232, ..., and 23n shown in FIG. 4) and an output layer 240. Parameters included in the plurality of hidden layers may be obtained through pre-training on related training data of a specific task type. For example, the task types may include image recognition, image categorization, and super-resolution image reconstruction.

At the neural network layer 230, the plurality of hidden layers are followed by the output layer 240, namely, the last layer of the entire convolutional neural network 200. The output layer 240 has a loss function similar to a categorical cross-entropy loss, and the loss function is specifically used to calculate a prediction error. Once forward propagation (propagation in a direction from 210 to 240 shown in FIG. 4) of the entire convolutional neural network 200 is completed, back propagation (propagation in a direction from 240 to 210 shown in FIG. 4) is started to update a weight value and deviation of each layer mentioned above, to reduce a loss of the convolutional neural network 200 and an error between a result output by the convolutional neural network 200 through the output layer and an ideal result.

It should be noted that the convolutional neural network 200 shown in FIG. 4 is merely used as an example of a convolutional neural network. In specific application, the convolutional neural network may alternatively exist in a form of another network model, for example, a plurality of parallel convolutional layers/pooling layers, and extracted features are all input into the entire neural network layer 230 for processing.

A normalization layer in this application is used as a function layer of the CNN. In principle, the normalization layer may be implemented after or before any one of the foregoing layers of the CNN. Feature matrix output from a previous layer is used as input of the normalization layer, and output of the normalization layer may also be used as input of any function layer of the CNN. However, in actual application of the CNN, the normalization layer is usually implemented after a convolutional layer. A feature matrix output from the convolutional layer is used as an input matrix.

Based on the foregoing descriptions of the system architecture 100 and related functions of the convolutional neural network 200 in FIG. 3 and FIG. 4, the following describes embodiments of a neural network training method and a speech matching method provided in this application on a model training side and a model application side with reference to the foregoing application scenarios, the system architecture, the structure of the convolutional neural network, and the structure of the neural network processor, and gives specific analysis and a solution of a technical problem proposed in this application.

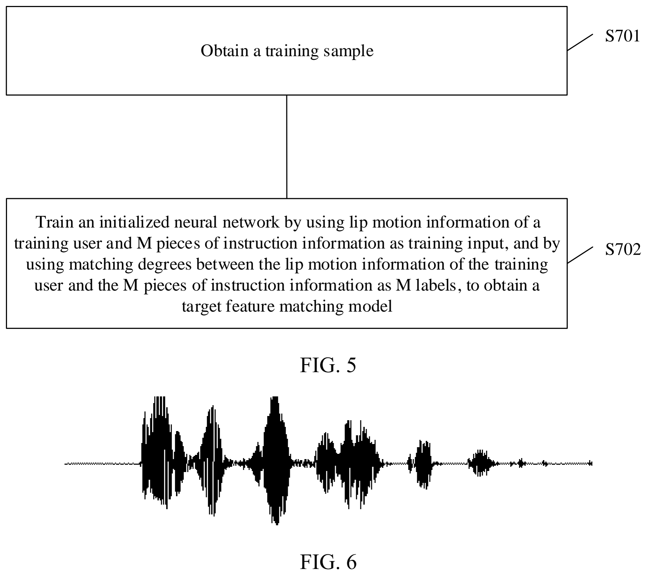

FIG. 5 is a schematic flowchart of a neural network training method according to an embodiment of the present invention. The method may be applied to the application scenarios in FIG. 1 and FIG. 2 and the system architecture, specifically applied to the training device 120 in FIG. 3. The following provides descriptions with reference to FIG. 5 by using an example in which an execution body is the training device 120 in FIG. 3 or a device including the training device 120. The method may include the following steps S701 and S702.

S701: Obtain a training sample, where the training sample includes lip motion information of a training user and M pieces of instruction information.

Specifically, for example, the lip motion information of the training user is speech information sent by a user Xiaofang: "Hello, my name is Xiaofang. I am from Hunan, China. How about you?" The corresponding lip motion information is a lip motion video or an image sequence of continuous lip motion, or a vector parameter formed by upper-lower lip distances that can reflect lip opening and closing motion according to a time sequence relationship. The M pieces of instruction information include a waveform sequence or text information of instruction information of "Raise the temperature of the air conditioner" as an instruction sample and other instruction information, for example, speech information "Lower the back angle of the seat", "Open the car window", and "Turn off music" as negative samples. Optionally, the M pieces of instruction information include instruction information that matches the lip motion information of the training user and (M - 1) pieces of instruction information that does not match the lip motion information of the training user. For example, the lip motion information is an image sequence of continuous lip motion (namely, a video of a pronunciation mouth shape) corresponding to the instruction information "Raise the temperature of the air conditioner" sent by a user A, and the M pieces of instruction information include the speech waveform sequence of the positive speech sample and speech waveform sequences of (M - 1) negative samples. It may be understood that the M pieces of instruction information may alternatively include a plurality of positive samples and a plurality of negative samples. In other words, a quantity of positive samples and a quantity of negative samples are not specifically limited, provided that both a positive sample and a negative sample are included.

S702: Train an initialized neural network by using the lip motion information of the training user and the M pieces of speech information as training input, and by using matching degrees between the lip motion information of the training user and the M pieces of speech information as M labels, to obtain a target feature matching model.

Specifically, for example, a label between the lip motion information of the training user and the instruction information "Raise the temperature of the air conditioner" of the positive sample is "matching degree = 1". Labels between the lip motion information of the training user and other instruction information "Lower the back angle of the seat", "Open the car window", and "Turn off music" of the negative samples are "matching degree = 0.2", "matching degree = 0", and "matching degree = 0", and the like. Details are not described herein again. That is, the initialized neural network model can be trained by using the training input and the preset labels to obtain the target feature matching model that needs to be used in this application. The target feature matching model can be used to match matching relationships between to-be-recognized instruction information and lip motion information of a plurality of users, thereby implementing any speech matching method in this application.

In a possible implementation, the training an initialized neural network by using the lip motion information of the training user and the M pieces of speech information as training input, and by using matching degrees between the lip motion information of the training user and the M pieces of speech information as M labels, to obtain a target feature matching model includes: typing the lip motion information of the training user and the M pieces of instruction information into the initialized neural network, to obtain, through calculation, matching degrees between the M pieces of instruction information and the lip motion information of the training user; and comparing the M labels with the matching degrees that are obtained through training and are between the M pieces of instruction information and the lip motion information of the training user, and training the initialized neural network to obtain the target feature matching model.

In a possible implementation, the target feature matching model includes a first model, a second model, and a third model. The typing the lip motion information of the training user and the M pieces of instruction information into the initialized neural network, to obtain, through calculation, matching degrees between the M pieces of instruction information and the lip motion information of the training user includes: typing the M pieces of instruction information into the first model, to obtain M speech features, where each of the M speech features is a K-dimensional speech feature, and K is an integer greater than 0; typing the lip motion information of the training user into the second model, to obtain an image sequence feature of the training user, where the image sequence feature of the training user is a K-dimensional image sequence feature; and typing the M speech features and the image sequence feature of the training user into the third model, to obtain, through calculation, the matching degrees between the M speech features and the image sequence feature of the training user.

A specific manner of training the initialized neural network model to obtain the target feature matching model in this application is to be described in a subsequent method embodiment on a model application side that corresponds to FIG. 7. Therefore, details are not described herein.

In this embodiment of the present invention, the initial neural network model is trained by using the lip motion information of the training user, and the matched instruction information and the plurality of pieces of mismatched instruction information as the input of the initialized neural network, and by using the actual matching degrees between the M pieces of instruction information and the lip motion information of the training user as the labels, to obtain the target feature matching model. For example, a matching degree corresponding to full matching is a label 1, and a matching degree corresponding to non-matching is a label 0. When the matching degrees that are obtained, through calculation, by the initial neural network model after training and are between the lip motion information of the training user and the M pieces of instruction information are closer to the M labels, the initialized neural network after training is closer to the target feature matching model.

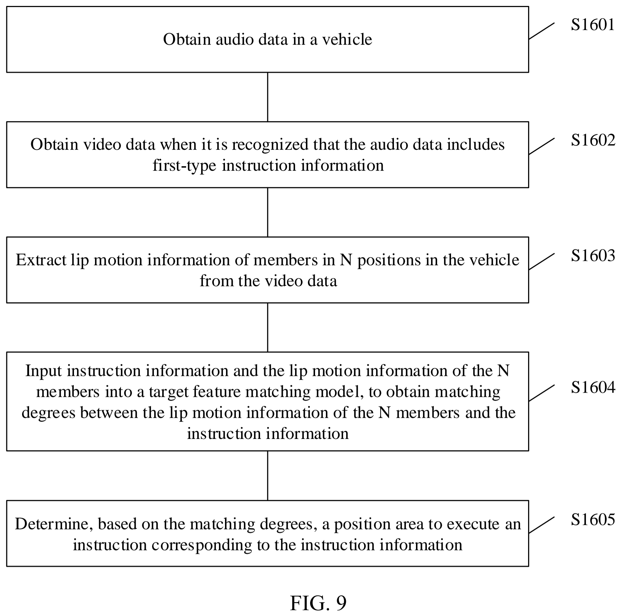

FIG. 9 is a schematic flowchart of still another speech instruction control method according to an embodiment of the present invention. This method is mainly applicable to a scenario in which in-vehicle members perform speech interaction control on a vehicle-mounted device in a vehicle. Generally, in a scenario in which there are a plurality of in-vehicle members in the vehicle, the vehicle-mounted device receives a speech instruction used to control the vehicle-mounted device. In a scenario in which the vehicle-mounted device needs to determine a position in which the instruction is sent by a member in the vehicle, and performs response control in a specific position area, this solution can be used to accurately recognize the position in which the member sends the speech instruction. The method may be applied to an application scenario in a vehicle cabin and a system architecture, and may be specifically applied to the client device 140 and the execution device 110 in FIG. 3. It may be understood that both the client device 140 and the execution device 110 may be disposed in a vehicle. The following provides descriptions with reference to FIG. 9 by using an example in which an execution body is an intelligent vehicle. The method may include the following steps S1601 to S1605.

Step S1601: Obtain audio data in the vehicle.

Specifically, the audio data in the vehicle collected by a vehicle-mounted microphone is obtained. The audio data includes an ambient sound inside the vehicle, for example, music of a speaker, or a noise of an engine of an air conditioner, an ambient sound outside the vehicle, and a speech instruction sent by a user.

Generally, a microphone array exists in a vehicle cabin of the intelligent vehicle, that is, a plurality of microphones exist in the vehicle and are distributed in different positions in the vehicle cabin. Therefore, when the microphone array exists in the vehicle, step S1601 may be specifically as follows in this case.

S1601a: Obtain audio data collected by the plurality of microphones in the vehicle.

In a human-machine interaction scenario, the microphone array collects the audio data, or the microphone array in the vehicle is in an audio data collection state in real time after the vehicle is started, or after a specific operation is performed by an in-vehicle member, such as, a vehicle owner, for example, after an audio collection function is enabled, the microphone array enters the audio collection state. A manner in which the microphone array collects the audio data is that the plurality of microphones respectively collect the audio data in different positions in the vehicle cabin.

S1601b: Obtain target audio data based on the audio data collected by the plurality of microphones.

The microphone array in the vehicle is usually the plurality of microphones disposed in different positions in the vehicle. Therefore, the audio data in an in-vehicle environment can be obtained and selected from a plurality of audio sources. Effects of the audio data collected in different positions are different. For example, when a person who sends the speech instruction is sitting in a back row of the vehicle, and a member in a front-row co-driver's seat is listening to a song and a speaker in the co-driver's seat is playing the song at this time, in this case, audio data collected in the co-driver's seat has a relatively large music sound due to the speaker in the co-driver's seat, and relatively small sound of the instruction information of the passenger in the back row, but a speaker in the back row collects a relatively clear speech signal with only a relatively small music sound. In this case, when the audio data is obtained, preprocessing is usually performed on the audio data collected by the microphones, and then the target audio data is selected through analysis and comparison. For example, because an environmental noise, a music sound, and a speech instruction are located in different frequency bands, the preprocessing may be performing filtering processing on the audio data collected by the plurality of microphones. An audio signal with the strongest speech signal after filtering processing as the target audio signal.

Herein, another conventional preprocessing manner may also be used to determine, in audio data collected by a microphone, that signal quality of a signal related to the speech instruction is the best, and select the audio signal as the target audio signal. The selected target audio signal may be the original audio signal collected by the microphone, or may be an audio signal obtained after preprocessing.

Step S1602: Obtain image data when it is recognized that the audio data includes first-type instruction information.

There are a plurality of manners of recognizing whether the audio data obtained in step S 1601 includes the first-type instruction information. For example, semantic recognition of audio information may be performed based on an RNN model, then instruction content is recognized based on text information obtained through recognition, and an instruction type is determined based on the instruction content; or an instruction type is determined directly based on feature information, for example, a keyword, in the text information. Specifically, there are a plurality of solutions for performing instruction recognition based on a speech in the conventional technology, and the solutions are not listed one by one herein. The audio data used for model input may be the audio data obtained after preprocessing such as environmental noise filtering is performed on the collected audio data, or may directly be the collected audio data. Alternatively, another speech recognition manner in the conventional technology may be used to determine whether the instruction information is included.

The first-type instruction information in this embodiment refers to instruction information that the vehicle-mounted device can receive and recognize, and needs to determine a position of an instruction initiator and then perform a corresponding operation response in a position area, namely, usually a control instruction of a facility inside the vehicle cabin, for example, an air conditioner adjustment instruction in the vehicle cabin, volume adjustment, or an instruction related to audio content selection and adjustment.

The instruction information may be a speech waveform sequence corresponding to an instruction time period in the audio data, or a text feature sequence of text information in the target time period extracted from the audio data. The to-be-recognized speech information mentioned during model description in this specification is essentially a speech waveform sequence in a corresponding time period in which a speech instruction is sent. Therefore, when the instruction information mentioned in FIG. 9 is in a form of a speech waveform sequence, the instruction information is also to-be-recognized speech information.

Similar to audio collection performed by the microphone, real-time in-vehicle audio and image data collection may automatically be performed after the vehicle is started, or a real-time collection function is enabled according to an instruction of a user, or image data collection is enabled at the same time when audio collection is started by default. A plurality of cameras are usually disposed on the vehicle, and different types of cameras are also disposed, for example, a monocular camera, a binocular camera, a TOF camera, and an infrared camera. In this solution, deployment positions and quantities of cameras for collecting the in-vehicle image data and types of the cameras are not limited, persons skilled in the art may perform corresponding selection and deployment according to a requirement for implementing a specific solution. The microphone in step S 1601 may be an independently disposed microphone, or may be a microphone integrated into a camera.

The image data may be obtained by an in-vehicle processing system by using the camera while the voice data is obtained by using the microphone. That is, the audio data and the image data are original audio data and original image data in a time period, namely, an audio data source and an image data source. Optionally, the audio data and the image data are collected in a same time period in a same scenario.

There are usually more than two rows of seats in the vehicle cabin, and when one camera is used to obtain the image data, blocking between members usually occur. Therefore, to clearly collect lip motion information of each member, the image data usually needs to be collected by using a plurality of cameras in different positions in the vehicle cabin. However, a quantity of audio data sources does not necessarily need to match a quantity of image data sources. For example, the audio data may be collected by using microphones disposed at the positions in the vehicle, and the image data in the vehicle cabin may be collected by using a global camera in the vehicle; or the audio data may be collected by using a specified microphone, and the image data in the vehicle cabin is collected by using cameras in a plurality of positions in the vehicle.

Step S1603: Extract lip motion information of members in N positions in the vehicle from the image data.

Specifically, position distribution of in-vehicle members is determined based on collected in-vehicle video information, and lip motion information of a member in each position is extracted, where the lip motion information carries a corresponding position identifier.

The lip motion information of each member in the lip motion information of the plurality of members in the vehicle includes an image sequence of lip motion of the corresponding user in a corresponding target time period, and the target time period is the time period corresponding to the instruction information in audio. That is, a lip video of each member extracted from the original image data, namely, a continuous lip motion image sequence, includes a continuous mouth shape change feature of the corresponding member. For example, a format of each frame of image in the image data collected by using the camera is a 24-bit BMP bitmap. A BMP image file (Bitmap-File) format is a format used in Windows for storing an image file. For a 24-bit image, 3 bytes are used to store a color value, where each byte represents one color, and colors are arranged in red (R), green (R), and blue (B). An RGB color image is converted into a grayscale image. An intelligent device obtains at least one face area from the image data collected by using the camera based on a facial recognition algorithm, and further assigns a face ID (different from that in a robot or smart speaker scenario, the face ID corresponds to a position in the vehicle) to each face area by using each face area as a unit. A video sequence stream in a mouth area is extracted, where a frame rate of the video is 30 f/s (frame rate (Frame rate) = frames (Frames)/time (Time), and a unit is frames per second (f/s, frames per second, fps)). Nine consecutive image frames form a video stream with a length of 0.3 seconds. Image data of the nine image frames (video speed: 30 fps) is concatenated (concat) into a cube whose dimension is 9 x 60 x 100, where 9 represents a quantity of frames (a temporal feature) indicating time information. Each channel represents a 60 x 100 grayscale image (a 2d spatial feature) for a mouth cavity area. An image sequence of lip motion corresponding to each of the N users in 0.3s is used as input of a video feature, and 0.3s is the target time period.

For details about how to extract the lip motion information of the plurality of members from the image data, refer to the description of the corresponding technical solution in the previous embodiment of the present invention.

Step S1604: Type the instruction information and the lip motion information of the N members into a target feature matching model, to obtain matching degrees between the lip motion information of the N members and the instruction information.

Specifically, the instruction information and the image sequence of the lip motion of each of the N members in the target time period are respectively used as input of an audio feature and input of a video feature, and are input to the target feature matching model, to separately calculate the matching degrees between the instruction information and each of the lip motion features of the N members. The matching degree may be specifically a value greater than or equal to 0 and less than or equal to 1.

The instruction information herein may be shown in FIG. 6, where FIG. 6 is an example diagram of a sound waveform according to this embodiment of the present invention, or a form of identifier information of an instruction, for example, a form of a sequence number or a form of an instruction statement. In a possible implementation, it is assumed that a plurality of users in the audio data speak at the same time. In this case, a user that sends a segment of speech information needs to be determined, and target speech information in the audio data, namely, the to-be-recognized speech information, needs to be first recognized and extracted. Alternatively, it is assumed that the audio data includes a plurality of segments of speech information spoken by a user. The intelligent device needs to recognize only one segment of speech information, and the segment of speech information is the to-be-recognized speech information. For example, the intelligent device extracts the audio feature from the audio data obtained by the microphone array in S801. A specific method may be extracting the speech feature by using a Mel-frequency cepstrum coefficient. A 40-dimensional feature is extracted from data whose frame length is 20 ms by using the Mel-frequency cepstrum coefficient (MFCC). Frames are non-overlapping (non-overlapping). Every 15 frames (corresponding to 0.3-second audio clips) are concatenated (concat) into a cube whose dimensions are 15 x 40 x 3 (15 is a temporal feature, and 40 x 3 is a 2d spatial feature). A speech waveform sequence within 0.3s is used as input of the audio feature, where 0.3s is the target time period. In addition to the foregoing manner, another manner in the conventional technology may be used to separate a target statement in a segment of speech.

Specific implementation of the target feature matching model is specifically described below. For a model structure, refer to subsequent descriptions about FIG. 7 and the foregoing descriptions of model training and obtaining in FIG. 3.

Step S1605: Determine, based on the matching degrees, the position area to execute the instruction corresponding to the instruction information.

The matching degree is usually a value. Therefore, a corresponding determining policy in S1605 can be determining an in-vehicle position of a member corresponding to lip motion information, with the highest matching degree, of a member as the target area for executing the instruction information, and executing the instruction.

If the instruction is about lowering a temperature or an air volume of an air conditioner, an operation of lowering the temperature or the air volume of the air exhaust vent is performed only in the target area.

In addition, S1604 and S1605 may be as follows.

Step S1604: Type the instruction information and lip motion information of any one member into a target feature matching model, to obtain a matching degree between the lip motion information of the member and the instruction information.

Step S1605: When the matching degree is greater than a known threshold, execute, in a position area of the member, an instruction corresponding to the instruction information.

If the matching degree is less than the known threshold, a matching degree between lip motion information of a member in another position in the vehicle and the instruction information continues to be determined according to a specific rule, until lip motion information whose matching degree is greater than the known threshold is obtained, or matching is performed for all the members in the vehicle, the matching process ends.

In addition to recognizing the position of the instruction initiator and performing the corresponding operation in the specific position in the foregoing embodiment, there is a scenario in which an identity of an instruction initiator needs to be determined in a vehicle cabin. For example, when a speech instruction related to vehicle control is recognized, whether the instruction is sent by a driver needs to be determined in this case, so as to determine whether the instruction can be executed. For this type of scenario, a specific implementation is as follows.

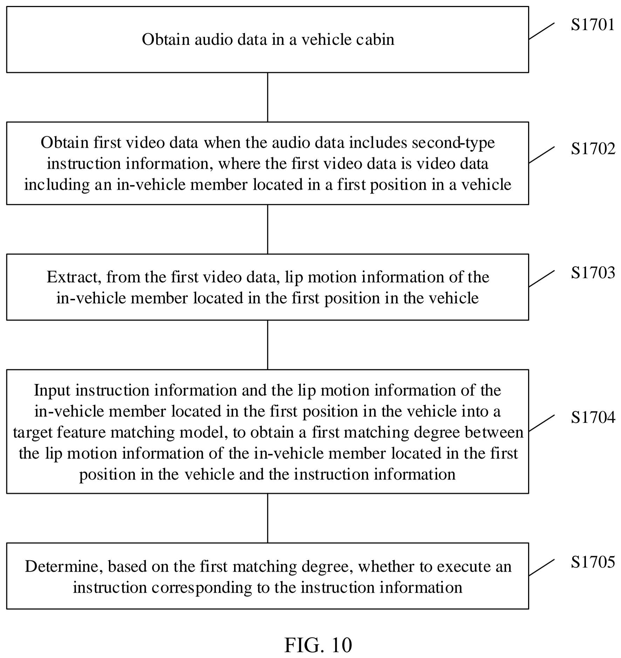

FIG. 10 is a schematic flowchart of still another speech matching method according to an embodiment of the present invention. This method is mainly applicable to a scenario in which a vehicle performs, according to a speech instruction, running-related operation control. Because there are usually a plurality of members in the vehicle, it is usually considered that only a driver has permission to perform speech operation control on vehicle running. To avoid misoperation and misidentification, when receiving the speech instruction used for vehicle running control, a vehicle-mounted device needs to determine whether the speech instruction is sent by the driver, and then determine, based on a recognition result, whether to execute the vehicle running instruction. The method may include the following steps S1701 to S1705.

Step S1701: Obtain audio data in the vehicle.

Specific implementation in S1701 is the same as that in S1601.

Step S1702: Obtain image data when it is recognized that the audio data includes second-type instruction information.

The second-type instruction information in S1702 only needs to refer to instruction information related to running control of the vehicle, for example, turning, acceleration, start, and driving mode switching of the vehicle. When this type of instruction information is recognized, the image data of a member at a driver's seat needs to be obtained.

For a specific instruction recognition manner and an image data obtaining manner, refer to S1602.

Step S1703: Extract lip motion information of a member in a first position from the image data. For how to extract the lip motion information and how to recognize the lip motion information, refer to S1603.

Step S1704: Type the instruction information and the lip motion information of the member in the first position into a target feature matching model, to obtain a matching degree between the lip motion information of the member at the driver's seat and the instruction information.

Step S1705: Determine, based on the matching degree, whether to execute the instruction corresponding to the instruction information.

There are a plurality of determining manners in S 1705. Because the matching degree is usually a value, in S1705, whether to execute the instruction information can be determined based on whether the matching degree is greater than a preset threshold. That is, when the matching degree is greater than the preset threshold, it is considered that the instruction is sent by the member in the first position, and the vehicle running control instruction is executed. Otherwise, the instruction is not executed.

Alternatively, S1705 may be as follows: Whether a matching degree corresponding to the lip information of the member in the first position is the highest in matching degrees between lip motion information of all members in the vehicle and the instruction information. In this case, in addition to extracting the lip motion information of the member in the first position, lip motion information of other members in the vehicle needs to be extracted in S1703. Similarly, in S1704, in addition to the instruction information and the lip motion information of the member in the first position into a target feature matching model, the lip information of the other members also needs to be input into the target feature matching model, to obtain corresponding matching degrees.

During specific implementation of the solution, the first position in the foregoing embodiment is usually the driver's seat, for example, it may be initially set by default in an in-vehicle control system that the member at the driver's seat has the permission to control the vehicle running operation by the speech, or it may be manually set by a user to change specific position distribution each time the user takes the vehicle, for example, it is set that both the driver's seat and the co-driver's seat have the vehicle running control permission. In this case, the first position is the driver's seat and the co-driver's seat.

Alternatively, this embodiment of the present invention is specifically implemented when the vehicle is initialized. Image information and permission information of a member who uses the vehicle at home may be entered on the vehicle according to a vehicle prompt requirement or actively set by a vehicle owner. In this case, in specific implementation of the solution of this embodiment of the present invention, before the vehicle runs or after the vehicle starts to start, the camera in the vehicle obtains position information of the registered member having the running control permission, and then when the vehicle control-related instruction is recognized, whether the instruction is the speech instruction sent by the member at the position is determined based on lip motion information corresponding to the position at which the member having the control permission is located.

In addition to determining whether the vehicle running control-type speech instruction is sent by the member at the driver's seat, this embodiment of the present invention may also be applied to determining whether another type of instruction is executable. For example, it can be manually set or set by default by the vehicle that only the vehicle owner or the driver can perform speech control for a call function. The foregoing embodiments are merely specific examples, and do not limit a specific instruction type or a specific fixed position.

In the foregoing two embodiments of in-vehicle interaction, the instruction operation can be performed in a targeted manner by determining that the instruction is sent on a seat of the member in the vehicle, so as to provide more accurate in-vehicle interaction control for the user.

For speech control on vehicle running control, this can well prevent misoperation and misidentification, ensure that only the driver can perform corresponding vehicle running control, thereby providing security of vehicle running control.

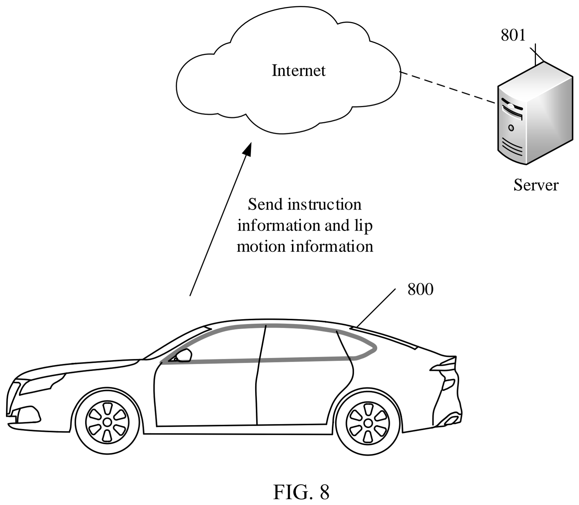

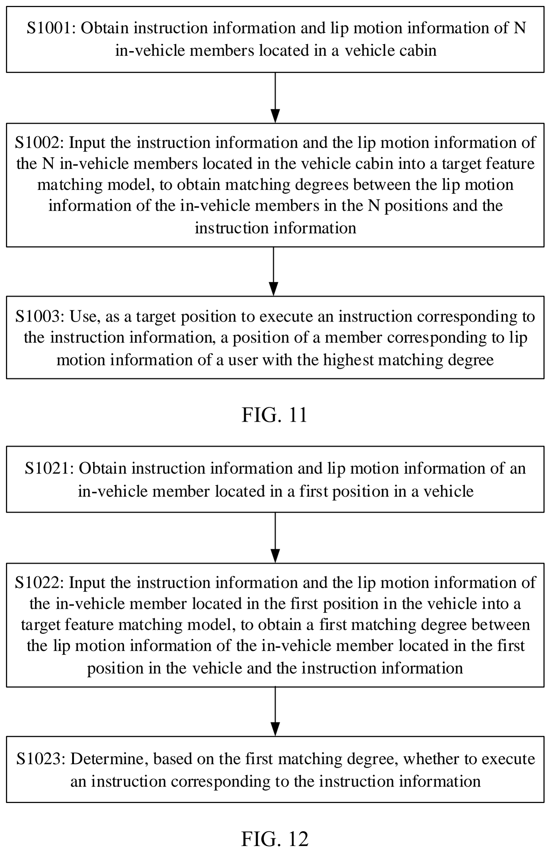

An embodiment of the present invention further provides still another speech instruction control method. The method may be applied to the in-vehicle application scenarios in FIG. 1 and FIG. 2 and the system architecture, and may be specifically applied to the execution device 110 in FIG. 3. It may be understood that in this case, the client device 140 and the execution device 110 may not be on a same physical device. FIG. 8 is an architectural diagram of a speech instruction control system according to an embodiment of the present invention. The system includes, for example, an intelligent vehicle 800 used as a device for collecting audio data and image data, and further used as a device for extracting to-be-recognized instruction information and lip information of N users. Matching between the extracted to-be-recognized instruction information and the extracted lip information of the N users may be performed on a server/service device/-service apparatus/cloud service device 801 in which the execution device 110 is located. Optionally, extraction of the to-be-recognized instruction information and the N pieces of user lip information may also be performed on a device side on which the execution device 110 is located. This is not specifically limited in this embodiment of the present invention. The following uses the cloud service device 801 in FIG. 8 as an example for description. As shown in FIG. 11, the method may include the following step S1001 to step S1003.

Step S1001: Obtain instruction information and lip motion information of N in-vehicle members located in a vehicle cabin.

In the foregoing steps, the instruction information is obtained based on audio data collected in the vehicle cabin, and the lip motion information of the in-vehicle members is obtained when it is determined that an instruction corresponding to the instruction information is a first-type instruction. The lip motion information includes an image sequence of lip motion of an in-vehicle member located in a first position in the vehicle in a target time period, where the target time period is a time period corresponding to the instruction in the audio data.

Step S1002: Type the instruction information and the lip motion information of the N in-vehicle members located in the vehicle cabin into a target feature matching model, to obtain matching degrees between the lip motion information of the in-vehicle members in the N positions and the instruction information.

Step S1003: Use, as a target position to execute the instruction corresponding to the instruction information, a position of a member corresponding to lip motion information of a user with the highest matching degree.

In addition, as shown in FIG. 12, there is a cloud solution in which permission of a member that specifically sends an instruction needs to be recognized, so as to determine a target execution area of the instruction.

Step S1021: Obtain instruction information and lip motion information of an in-vehicle member located in a first position in a vehicle.

In the foregoing steps, the instruction information is obtained based on audio data collected in a vehicle cabin, and the lip motion information of the in-vehicle member in the first position is obtained when it is recognized that the instruction corresponding to the instruction information is a second-type instruction. The lip motion information includes an image sequence of lip motion of the in-vehicle member located in the first position in the vehicle in a target time period, where the target time period is a time period corresponding to the instruction in the audio data.

Step S1022: Type the instruction information and the lip motion information of the in-vehicle member located in the first position in the vehicle into a target feature matching model, to obtain a first matching degree between the lip motion information of the in-vehicle member located in the first position in the vehicle and the instruction information.

Step S 1023: Determine, based on the first matching degree, whether to execute the instruction corresponding to the instruction information.

In a possible implementation, the target feature matching model includes a first model, a second model, and a third model; and
the typing the to-be-recognized speech information and the lip motion information of the N users into a target feature matching model, to obtain matching degrees between the lip motion information of the N users and the to-be-recognized speech information includes:

   typing the to-be-recognized speech information into the first model, to obtain a speech feature, where the speech feature is a K-dimensional speech feature, and K is an integer greater than 0;
   typing the lip motion information of the N users into the second model, to obtain N image sequence features, where each of the N image sequence features is a K-dimensional image sequence feature; and
   typing the speech feature and the N image sequence features into the third model, to obtain matching degrees between the N image sequence features and the speech feature.

In a possible implementation, the target feature matching model is a feature matching model obtained through training by using lip motion information of a training user and M pieces of instruction information as input, and by using matching degrees between the lip motion information of the training user and the M pieces of speech information as M labels.

In a possible implementation, the method further includes:

   determining user information of the target user, where the user information includes one or more of personal attribute information, facial expression information corresponding to the to-be-recognized speech information, and environment information corresponding to the to-be-recognized speech information; and
   generating, based on the user information, a control instruction that matches the user information.

In a possible implementation, the method further includes: extracting the lip motion information of the N users from the image data; and further, the extracting lip motion information of N users from the image data includes:

   recognizing N face areas in the image data based on a facial recognition algorithm, and extracting a lip motion video in each of the N face areas; and
   determining the lip motion information of the N users based on the lip motion video in each face area.

In a possible implementation, the method further includes: extracting the to-be-recognized speech information from the audio data; and further, the extracting the to-be-recognized speech information from the audio data includes: recognizing, based on a spectrum recognition algorithm, audio data of different spectra in the audio data, and recognizing audio data of a target spectrum as the to-be-recognized speech information.

It should be noted that, for a procedure of the method performed by the cloud service device and described in this embodiment of the present invention, refer to the related method embodiments in FIG. 9 to FIG. 12, and details are not described herein again.

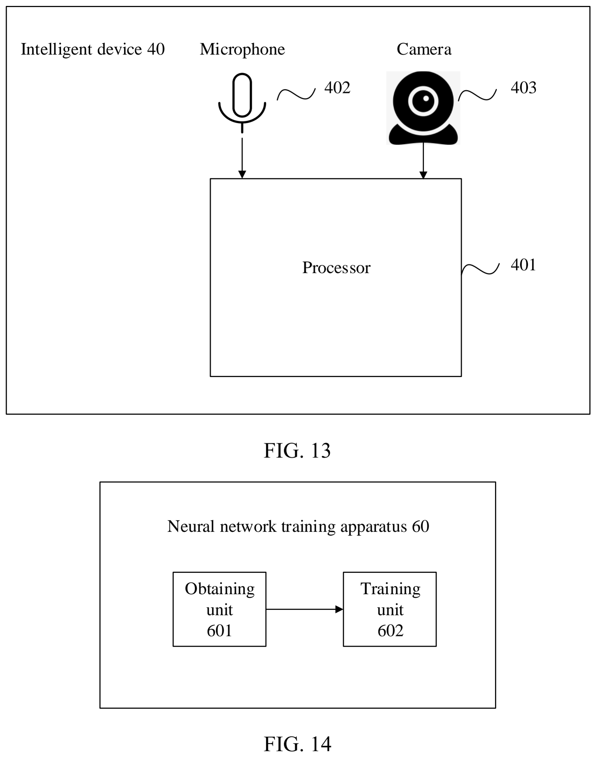

FIG. 13 is a schematic diagram of a structure of an intelligent device according to an embodiment of the present invention, or FIG. 13 is a schematic diagram of a function principle of an intelligent device according to an embodiment of the present invention. The intelligent device may be a vehicle-mounted device, a vehicle-mounted system, or an intelligent vehicle. The intelligent device 40 may include a processor 401, and a microphone 402 and a camera 403 that are coupled to the processor 401. When the intelligent device is an intelligent vehicle or an in-vehicle speech processing system, there are usually a plurality of microphones 402 and cameras 403, for example, the application scenario in FIG. 12.

The microphone 402 is configured to collect audio data.

The camera 403 is configured to collect image data. The audio data and the image data are collected in a same scenario.

The processor 401 obtains the audio data in a vehicle cabin, when it is recognized that the audio data in the vehicle cabin includes a first-type instruction, obtains the image data in the vehicle cabin, and extracts, from the image data in the vehicle cabin, lip motion information of in-vehicle members in N positions in the vehicle cabin. The processor is configured to: input instruction information corresponding to the first-type instruction and the lip motion information of the in-vehicle members in the N positions in the vehicle cabin into a target feature matching model, to obtain matching degrees between the lip motion information of the in-vehicle members in the N positions and the instruction information; and use, as a target position to execute the instruction corresponding to the instruction information, a position of a member corresponding to lip motion information of a user with the highest matching degree.

For example, in the application scenario corresponding to FIG. 12, the microphone 402 is configured to collect audio data.

The camera 403 is configured to collect image data. The audio data and the image data are collected in the same scenario.

The processor 401 obtains the audio data in the vehicle cabin, when it is recognized that the audio data in the vehicle cabin includes a second-type instruction, obtains the image data in the vehicle cabin, obtains a first image data from the image data in the vehicle cabin, where the first image data is image data of an in-vehicle member in a first position in the vehicle, and extracts lip motion information of the in-vehicle member in the first position in the vehicle from the first image data. The processor is configured to: input instruction information corresponding to the second-type instruction and the lip motion information of the in-vehicle member located in the first position in the vehicle into a target feature matching model, to obtain a first matching degree between the lip motion information of the in-vehicle member located in the first position in the vehicle and the instruction information; and determine, based on the first matching degree, whether to execute an instruction corresponding to the instruction information.

In a possible implementation, the to-be-recognized speech information includes a speech waveform sequence in a target time period, and lip motion information of each user in the lip motion information of the N users includes an image sequence of lip motion of the corresponding user in the target time period.

In a possible implementation, the processor 401 is specifically configured to: input the to-be-recognized speech information and the lip motion information of the N users into the target feature matching model, to obtain the matching degrees between the lip motion information of the N users and the to-be-recognized speech information; and determine the user corresponding to the lip motion information of the user with the highest matching degree as the target user to which the to-be-recognized speech information belongs.

In a possible implementation, the target feature matching model includes a first model, a second model, and a third model. The processor 401 is specifically configured to: input the to-be-recognized speech information into the first model, to obtain a speech feature, where the speech feature is a K-dimensional speech feature, and K is an integer greater than 0; input the lip motion information of the N users into the second model, to obtain N image sequence features, where each of the N image sequence features is a K-dimensional image sequence feature; and input the speech feature and the N image sequence features into the third model, to obtain matching degrees between the N image sequence features and the speech feature.

In a possible implementation, the target feature matching model is a feature matching model obtained through training by using lip motion information of a training user and M pieces of speech information as input, and by using matching degrees between the lip motion information of the training user and the M pieces of speech information as M labels, where the M pieces of speech information include speech information matched with the lip motion information of the training user.

In a possible implementation, the processor 401 is further configured to: determine user information of the target user, where the user information includes one or more of personal attribute information, facial expression information corresponding to the to-be-recognized speech information, and environment information corresponding to the to-be-recognized speech information; and generate, based on the user information, a control instruction that matches the user information.

In a possible implementation, the processor 401 is specifically configured to: recognize N face areas in the image data based on a facial recognition algorithm, and extract a lip motion video in each of the N face areas; and determine the lip motion information of the N users based on the lip motion video in each face area.

In a possible implementation, the processor 401 is specifically configured to: recognize, based on a spectrum recognition algorithm, audio data of different spectra in the audio data; and recognize audio data of a target spectrum as the to-be-recognized speech information.

It should be noted that, for functions of the related modules in the intelligent device 40 described in this embodiment of the present invention, refer to the related method embodiments in FIG. 9 to FIG. 12, and details are not described herein again.

FIG. 14 is a schematic diagram of a structure of a neural network training apparatus according to an embodiment of the present invention, or FIG. 14 is a schematic diagram of a function principle of an intelligent device according to an embodiment of the present invention. A model trained by the neural network training apparatus may be used for a vehicle-mounted device, a vehicle-mounted system, an intelligent vehicle, a cloud server, or the like. The neural network training apparatus 60 may include an obtaining unit 601 and a training unit 602.

The obtaining unit 601 is configured to obtain a training sample, where the training sample includes lip motion information of a training user and M pieces of instruction information, and optionally, the M pieces of instruction information include instruction information that matches the lip motion information of the training user and (M - 1) pieces of instruction information that does not match the lip motion information of the training user.

The training unit 602 is configured to: train an initialized neural network by using the lip motion information of the training user and the M pieces of instruction information as training input, and by using matching degrees between the lip motion information of the training user and the M pieces of instruction information as M labels, to obtain a target feature matching model.

In a possible implementation, the lip motion information of the training user includes a lip motion image sequence of the training user, and the M pieces of instruction information include a speech waveform sequence that matches the lip motion image sequence of the training user and (M - 1) speech waveform sequences that do not match the lip motion image sequence of the training user.

In a possible implementation, the training unit 602 is specifically configured to:

input the lip motion information of the training user and the M pieces of instruction information into the initialized neural network, to obtain, through calculation, the matching degrees between the M pieces of instruction information and the lip motion information of the training user; and

train the initialized neural network through comparing the M labels with the matching degrees that are obtained through calculation and between the M pieces of instruction information and the lip motion information of the training user, to obtain the target feature matching model.

In a possible implementation, the target feature matching model includes a first model, a second model, and a third model. The training unit 602 is specifically configured to:

input the M pieces of instruction information into the first model, to obtain M speech features, where each of the M speech features is a K-dimensional speech feature, and K is an integer greater than 0;

input the lip motion information of the training user into the second model, to obtain an image sequence feature of the training user, where the image sequence feature of the training user is a K-dimensional image sequence feature;

input the M speech features and the image sequence feature of the training user into the third model, to obtain, through calculation, matching degrees between the M speech features and the image sequence feature of the training user; and

train the initialized neural network through comparing the M labels with the matching degrees that are obtained through calculation and between the M speech features and the image sequence feature of the training user, to obtain the target feature matching model.

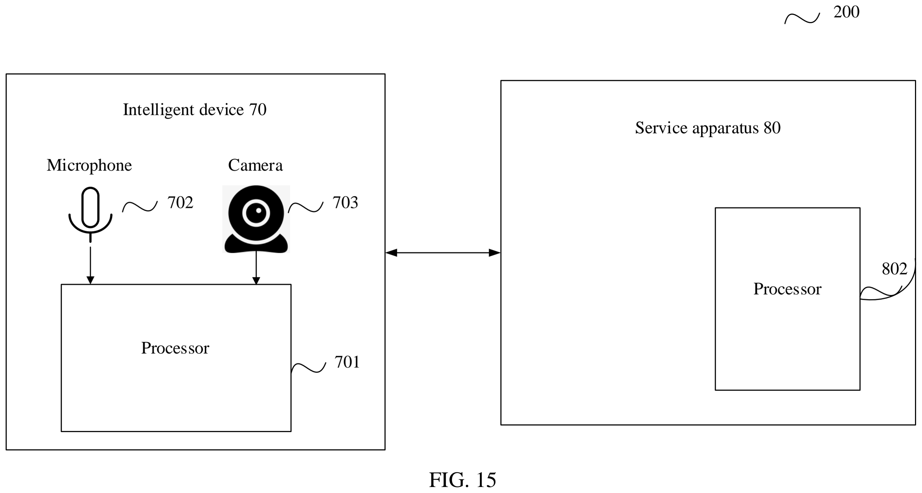

FIG. 15 is a structural diagram of a system according to an embodiment of the present invention. A schematic diagram of a structure of an intelligent device 70 and a schematic diagram of a structure of a server device 80 are included. The intelligent device may be an intelligent vehicle. The intelligent device 70 may include a processor 701, and a microphone 702 and a camera 703 that are coupled to the processor 701.

The microphone 702 is configured to collect audio data.

The camera 703 is configured to collect image data.

The processor 701 is configured to: obtain audio data and image data;

extract to-be-recognized speech information from the audio data, where the to-be-recognized speech information includes a speech waveform sequence in a target time period; and

extract lip motion information of N users from the image data, where lip motion information of each user in the lip motion information of the N users includes an image sequence of lip motion of the corresponding user in the target time period, and N is an integer greater than 1.

When it is applied to an intelligent vehicle or an in-vehicle speech interaction system, the processor 701 is configured to obtain the audio data; obtain the image data in a vehicle cabin when the audio data includes a target instruction; and extract lip motion information of in-vehicle members in N positions in the vehicle cabin from the image data in the vehicle cabin. Herein, the lip motion information of the in-vehicle member may be obtained and sent to the service apparatus, or collected in-vehicle image information may be sent to the service apparatus, and the service apparatus extracts the lip motion information.

Alternatively, the processor 701 is configured to: obtain the audio data in the vehicle cabin; obtain first image data when it is recognized that the audio data includes a second-type instruction, where the first image data is image data including an in-vehicle member located in a first position in the vehicle; and extract lip motion information of the in-vehicle member located in the first position in the vehicle from the first image data.

It should be noted that, for functions of the related modules in the intelligent device 70 described in this embodiment of the present invention, refer to the related method embodiments in FIG. 9 to FIG. 12, and details are not described herein again.

The schematic diagram of the structure of the service apparatus is included in FIG. 15. The service apparatus may be a server, a cloud server, or the like. The service apparatus 80 may include a processor. Optionally, the processor may include a neural network processor and a processor 802 coupled to the neural network processor, or directly include a processor.

In an in-vehicle implementation scenario, the neural network processor 801 is configured to:

input instruction information corresponding to the first-type instruction and the lip motion information of the in-vehicle members in the N positions in the vehicle cabin into a target feature matching model, to obtain matching degrees between the lip motion information of the in-vehicle members in the N positions and the instruction information; and use, as a target position to execute the instruction corresponding to the instruction information, a position of a member corresponding to lip motion information of a user with the highest matching degree; or

configured to: input instruction information corresponding to the second-type instruction and the lip motion information of the in-vehicle member located in the first position in the vehicle into a target feature matching model, to obtain a first matching degree between the lip motion information of the in-vehicle member located in the first position in the vehicle and the instruction information; and determine, based on the first matching degree, whether to execute an instruction corresponding to the instruction information.

In a possible implementation, the target feature matching model includes a first model, a second model, and a third model. The processor 802 is specifically configured to: input the to-be-recognized speech information or instruction information into the first model, to obtain a speech feature, where the speech feature is a K-dimensional speech feature, and K is an integer greater than 0; input the lip motion information of the N users into the second model, to obtain N image sequence features, where each of the N image sequence features is a K-dimensional image sequence feature; and input the speech feature and the N image sequence features into the third model, to obtain matching degrees between the N image sequence features and the speech feature.

In a possible implementation, the target feature matching model is a feature matching model obtained through training by using lip motion information of a training user and M pieces of speech information as input, and by using matching degrees between the lip motion information of the training user and the M pieces of speech information as M labels.

In a possible implementation, the server further includes the processor 802. The processor 802 is configured to: determine user information of the target user, where the user information includes one or more of personal attribute information, facial expression information corresponding to the to-be-recognized speech information, and environment information corresponding to the to-be-recognized speech information; and generate, based on the user information, a control instruction that matches the user information.

In a possible implementation, the server further includes the processor 802. The processor 802 is further configured to: recognize N face areas in the image data based on a facial recognition algorithm, and extract a lip motion video in each of the N face areas; and determine the lip motion information of the N users based on the lip motion video in each face area.

In a possible implementation, the server further includes the processor 802. The processor 802 is further configured to: recognize, based on a spectrum recognition algorithm, audio data of different spectra in the audio data; and recognize audio data of a target spectrum as the to-be-recognized speech information.

An embodiment of the present invention further provides a computer storage medium. The computer storage medium may store a program. When the program is executed, at least some or all of the steps of any method embodiments may be performed.

An embodiment of the present invention further provides a computer program. The computer program includes instructions. When the computer program is executed by a computer, the computer is enabled to perform some or all of the steps described in any one of the foregoing method embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in another order or simultaneously. It should be further appreciated by persons skilled in the art that embodiments described in this specification all belong to preferable embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device, and may be specifically a processor in a computer device) to perform all or some of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

Further embodiments of the present invention are provided in the following. It should be noted that the numbering used in the following section does not necessarily need to comply with the numbering used in the previous sections.

Embodiment 1. A speech instruction control method, comprising:

obtaining a first-type instruction and lip motion information of in-vehicle members located in N positions in a vehicle cabin in a target time period, wherein the first-type instruction is obtained based on target audio data collected in the vehicle cabin, the lip motion information of the in-vehicle member is obtained when the first-type instruction is recognized from the target audio data, and the target time period is a time period corresponding to the first-type instruction in the audio data;
matching the first-type instruction with the lip motion information of the in-vehicle members in the N positions in the vehicle cabin, and obtaining a target position based on a matching result between the lip motion information of the in-vehicle members in the N positions and the first-type instruction, wherein the target position is a position of an in-vehicle member whose lip motion information matches the first-type instruction in the matching result; and
sending indication information indicating to execute the first-type instruction in the target position.

Embodiment 2. The method according to embodiment 1, wherein
the obtaining a first-type instruction and lip motion information of in-vehicle members located in N positions in a vehicle cabin is specifically:

obtaining the target audio data in the vehicle cabin;
obtaining image data in the vehicle cabin when recognizing that the target audio data comprises the first-type instruction; and

extracting the lip motion information of the in-vehicle members in the N positions in the vehicle cabin from the image data in the vehicle cabin.

Embodiment 3. The method according to embodiment 2, wherein

the extracting the lip motion information of the in-vehicle members in the N positions in the vehicle cabin from the image data in the vehicle cabin is specifically:

extracting the lip motion information of the in-vehicle members in the N positions in the vehicle cabin from the image data in the vehicle cabin when recognizing more than one in-vehicle member.

Embodiment 4. The method according to any one of embodiments 1 to 3, wherein

the matching the first-type instruction with the lip motion information of the in-vehicle members in the N positions in the vehicle cabin, and obtaining a target position based on a matching result between the lip motion information of the in-vehicle members in the N positions and the first-type instruction is specifically:

obtaining, based on the first-type instruction and the lip motion information of the N in-vehicle members located in the vehicle cabin, a matching degree between lip motion information of an in-vehicle member in each of the N positions and the instruction information, wherein N is an integer greater than 1; and using, as the target position, a position of an in-vehicle member corresponding to lip motion information with the highest matching degree.

Embodiment 5. The method according to any one of embodiments 1 to 4, wherein the first-type instruction is a speech waveform sequence extracted from the audio data or text instruction information recognized based on the audio data.

Embodiment 6. The method according to any one of embodiments 1 to 4, wherein the lip motion information of the in-vehicle members in the N positions in the vehicle cabin is image sequences of lip motion of the in-vehicle members in the N positions in the vehicle cabin in the target time period.

Embodiment 7. The method according to embodiment 5, wherein the method further comprises:

generating a correspondence between the lip motion information of the in-vehicle members in the N positions and the N positions; and

the using, as the target position, a position of an in-vehicle member corresponding to lip motion information with the highest matching degree comprises:

obtaining the target lip motion information with the highest matching degree; and determining, based on the correspondence between the lip motion information of the in-vehicle members in the N positions and the N positions, the position corresponding to the target lip motion information as the target position.

Embodiment 8. The method according to embodiment 5, wherein the method further comprises:

generating a correspondence between the lip motion information of the in-vehicle members in the N positions and identities of the in-vehicle members in the N positions; and

the using, as the target position, a position of an in-vehicle member corresponding to lip motion information with the highest matching degree comprises:

obtaining the target lip motion information with the highest matching degree; determining the target in-vehicle member based on the correspondence between the lip motion information of the in-vehicle members in the N positions and the identities of the in-vehicle members in the N positions; and determining position information of the target in-vehicle member as the target position, wherein the position information of the target in-vehicle member is determined based on data from a sensor in the vehicle.

Embodiment 9. The method according to any one of embodiments 1 to 6, wherein

the audio data in the vehicle cabin is obtained based on data collected by a plurality of microphones in the vehicle cabin; or

the audio data in the vehicle cabin is obtained based on audio data collected by a microphone in a specified position area in the vehicle cabin.

Embodiment 10. The method according to any one of embodiments 1 to 9, wherein the first-type instruction is a control instruction in the vehicle cabin.

Embodiment 11. A speech instruction control method, comprising:

obtaining a first-type instruction and lip motion information of an in-vehicle member located in a first position in a vehicle, wherein the first-type instruction is obtained based on target audio data collected in a vehicle cabin, the lip motion information of the in-vehicle member in the first position is obtained when the second-type instruction is recognized from the target audio data, and the target time period is a time period corresponding to the second-type instruction in the audio data;

matching the second-type instruction with the lip motion information of the in-vehicle member in the first position, to obtain a matching result; and

when determining, based on the matching result, that the second-type instruction matches the lip motion information of the in-vehicle member in the first position, sending indication information indicating to execute the second-type instruction.

Embodiment 12. The method according to embodiment 11, wherein the first position is a driver's seat.

Embodiment 13. The method according to embodiment 11 or 12, wherein

the obtaining a second-type instruction and lip motion information of an in-vehicle member located in a first position in a vehicle is specifically:

obtaining the target audio data in the vehicle cabin;

obtaining image data in the vehicle cabin when recognizing that the target audio data comprises the second-type instruction; and

extracting the lip motion information of the in-vehicle member in the first position from the image data in the vehicle cabin.

Embodiment 14. The method according to embodiment 11 or 12, wherein

the matching the second-type instruction with the lip motion information of the in-vehicle member in the first position, to obtain a matching result is specifically:

determining the matching result between the second-type instruction and the lip motion information of the in-vehicle member in the first position based on a preset threshold and a matching degree between the second-type instruction and the lip motion information of the in-vehicle member in the first position.

Embodiment 15. The method according to any one of embodiments 11, 12, and 14, wherein the second-type instruction is a speech waveform sequence extracted from the audio data or text instruction information recognized based on the audio data.

Embodiment 16. The method according to any one of embodiments 11 to 14, wherein the lip motion information of the in-vehicle member in the first position is an image sequence of lip motion of the in-vehicle member in the first position in the target time period.

Embodiment 17. The method according to any one of embodiments 11 to 16, wherein the method further comprises:

when the audio data comprises the second-type instruction, obtaining image data of in-vehicle members in other N positions in the vehicle; and

extracting, from the image data of the in-vehicle members in the other N positions in the vehicle, lip motion information of the in-vehicle members in the other N positions in the vehicle in the target time period;

the matching the second-type instruction with the lip motion information of the in-vehicle member located in the first position in the vehicle, to obtain a matching result is specifically:

matching the second-type instruction with the lip motion information of the in-vehicle member located in the first position in the vehicle and the lip motion information of the in-vehicle members in the N positions, to obtain matching degrees between lip motion information of (N + 1) in-vehicle members and the second-type instruction; and obtaining lip motion information with the highest matching degree; and

the when determining, based on the matching result, that the second-type instruction matches the lip motion information of the in-vehicle member located in the first position in the vehicle, sending indication information indicating to execute the second-type instruction is specifically:

when the lip motion information with the highest matching degree is the lip motion information of the in-vehicle member located in the first position in the vehicle, sending the indication information indicating to execute the second-type instruction.

Embodiment 18. The method according to any one of embodiments 11 to 17, wherein the audio data in the vehicle cabin is obtained based on data collected by a plurality of microphones in the vehicle cabin; or

the audio data in the vehicle cabin is obtained based on audio data collected by a microphone in a specified position area in the vehicle cabin.

Embodiment 19. The method according to any one of embodiments 11 to 18, wherein the second-type instruction is a vehicle running control instruction.

Embodiment 20. A speech instruction control device, comprising a processor, wherein the processor is configured to:

obtain a first-type instruction and lip motion information of in-vehicle members located in N positions in a vehicle cabin in a target time period, wherein the first-type instruction is obtained based on target audio data collected in the vehicle cabin, the lip motion information of the in-vehicle member is obtained when the first-type instruction is recognized from the target audio data, and the target time period is a time period corresponding to the first-type instruction in the audio data;

match the first-type instruction with the lip motion information of the in-vehicle members in the N positions in the vehicle cabin, and obtain a target position based on a matching result between the lip motion information of the in-vehicle members in the N positions and the first-type instruction, wherein the target position is a position of an in-vehicle member whose lip motion information matches the first-type instruction in the matching result; and

send indication information indicating to execute the first-type instruction in the target position.

Embodiment 21. The device according to embodiment 20, wherein

the processor is configured to: obtain the target audio data in the vehicle cabin; obtain image data in the vehicle cabin when it is recognized that the target audio data comprises the first-type instruction; and extract the lip motion information of the in-vehicle members in the N positions in the vehicle cabin from the image data in the vehicle cabin.

Embodiment 22. The device according to embodiment 20, wherein

the processor is further configured to extract the lip motion information of the in-vehicle members in the N positions in the vehicle cabin from the image data in the vehicle cabin when more than one in-vehicle member is recognized.

Embodiment 23. The device according to any one of embodiments 20 to 22, wherein

that the processor matches the first-type instruction with the lip motion information of the in-vehicle members in the N positions in the vehicle cabin, and obtains a target position based on a matching result between the lip motion information of the in-vehicle members in the N positions and the first-type instruction is specifically:

the processor obtains, based on the first-type instruction and the lip motion information of the N in-vehicle members located in the vehicle cabin, a matching degree between lip motion information of an in-vehicle member in each of the N positions and the instruction information,

wherein N is an integer greater than 1; and uses, as the target position, a position of an in-vehicle member corresponding to lip motion information with the highest matching degree.

Embodiment 24. The device according to any one of embodiments 20 to 23, wherein

the processor is further configured to generate a correspondence between the lip motion information of the in-vehicle members in the N positions and the N positions; and

that the processor uses, as the target position, a position of an in-vehicle member corresponding to lip motion information with the highest matching degree comprises:

the processor obtains the target lip motion information with the highest matching degree; and

determines, based on the correspondence between the lip motion information of the in-vehicle members in the N positions and the N positions, the position corresponding to the target lip motion information as the target position.

Embodiment 25. The device according to any one of embodiments 20 to 24, wherein

the processor generates a correspondence between the lip motion information of the in-vehicle members in the N positions and identities of the in-vehicle members in the N positions; and

that the processor uses, as the target position, a position of an in-vehicle member corresponding to lip motion information with the highest matching degree comprises:

the processor obtains the target lip motion information with the highest matching degree;

determines the target in-vehicle member based on the correspondence between the lip motion information of the in-vehicle members in the N positions and the identities of the in-vehicle members in the N positions; and determines position information of the target in-vehicle member as the target position, wherein the position information of the target in-vehicle member is determined based on data from a sensor in the vehicle.

Embodiment 26. A speech instruction control device, comprising a processor, wherein the processor is configured to:

obtain a first-type instruction and lip motion information of an in-vehicle member located in a first position in a vehicle, wherein the first-type instruction is obtained based on target audio data collected in a vehicle cabin, the lip motion information of the in-vehicle member in the first position is obtained when the second-type instruction is recognized from the target audio data, and
the target time period is a time period corresponding to the second-type instruction in the audio data;
match the second-type instruction with the lip motion information of the in-vehicle member in the first position, to obtain a matching result; and
when it is determined, based on the matching result, that the second-type instruction matches the lip motion information of the in-vehicle member in the first position, send indication information indicating to execute the second-type instruction.

Embodiment 27. The device according to embodiment 26, wherein the first position is a driver's seat.
Embodiment 28. The device according to embodiment 26 or 27, wherein
that the processor obtains a second-type instruction and lip motion information of an in-vehicle member located in a first position in a vehicle is specifically:

the processor obtains the target audio data in the vehicle cabin; obtains image data in the vehicle cabin when it is recognized that the target audio data comprises the second-type instruction; and
extracts the lip motion information of the in-vehicle member in the first position from the image data in the vehicle cabin.
Embodiment 29. The device according to any one of embodiments 26 to 28, wherein
that the processor matches the second-type instruction with the lip motion information of the in-vehicle member in the first position, to obtain a matching result is specifically:

the processor determines the matching result between the second-type instruction and the lip motion information of the in-vehicle member in the first position based on a preset threshold and
a matching degree between the second-type instruction and the lip motion information of the in-vehicle member in the first position.

Embodiment 30. The device according to any one of embodiments 26 to 29, wherein the second-type instruction is a speech waveform sequence extracted from the audio data or text instruction information recognized based on the audio data.
Embodiment 31. The device according to any one of embodiments 26 to 29, wherein the lip motion information of the in-vehicle member in the first position is an image sequence of lip motion of the in-vehicle member in the first position in the target time period.
Embodiment 32. The device according to any one of embodiments 26 to 31, wherein

the processor is further configured to: when the audio data comprises the second-type instruction, obtain image data of in-vehicle members in other N positions in the vehicle; and extract, from the image data of the in-vehicle members in the other N positions in the vehicle, lip motion information of the in-vehicle members in the other N positions in the vehicle in the target time period;
that the processor matches the second-type instruction with the lip motion information of the in-vehicle member located in the first position in the vehicle, to obtain a matching result is specifically: the processor matches the second-type instruction with the lip motion information of the in-vehicle member located in the first position in the vehicle and the lip motion information of the in-vehicle members in the N positions, to obtain matching degrees between lip motion information of $(N + 1)$ in-vehicle members and the second-type instruction; and obtains lip motion information with the highest matching degree; and
that when it is determined, based on the matching result, that the second-type instruction matches the lip motion information of the in-vehicle member located in the first position in the vehicle, the processor sends indication information indicating to execute the second-type instruction is specifically:
when the lip motion information with the highest matching degree is the lip motion information of the in-vehicle member located in the first position in the vehicle, the processor sends the indication information indicating to execute the second-type instruction.

Embodiment 33. The device according to any one of embodiments 26 to 32, wherein the second-type instruction is a vehicle running control instruction.

Embodiment 34. A chip system, wherein the chip system comprises at least one processor, a memory, and an interface circuit, the memory, the interface circuit, and the at least one processor are interconnected through a line, and the at least one memory stores instructions; and when the instructions are executed by the processor, the method according to any one of embodiments 1 to 19 is implemented.

Embodiment 35. A computer-readable storage medium, wherein the computer-readable medium is configured to store program code, and the program code comprises the method according to any one of embodiments 1 to 19.

Embodiment 36. A computer program, wherein the computer program comprises instructions, and when the computer program is executed, the method according to any one of embodiments 1 to 19 is implemented.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A speech instruction control method, comprising:

   obtaining a first-type instruction and lip motion information of an in-vehicle member located in a first position in a vehicle in a target time period, wherein the first-type instruction is obtained based on target audio data collected in a vehicle cabin, and the target time period is a time period corresponding to the second-type instruction in the audio data;

   matching the second-type instruction with the lip motion information of the in-vehicle member in the first position, to obtain a matching result; and

   when determining, based on the matching result, that the second-type instruction matches the lip motion information of the in-vehicle member in the first position, sending indication information indicating to execute the second-type instruction.

2. The method according to claim 1, wherein the first position is a driver's seat.

3. The method according to claims 1 and 2, wherein
   the obtaining a second-type instruction and lip motion information of an in-vehicle member located in a first position in a vehicle is specifically:

   obtaining the target audio data in the vehicle cabin;
   obtaining image data in the vehicle cabin when recognizing that the target audio data comprises the second-type instruction; and
   extracting the lip motion information of the in-vehicle member in the first position from the image data in the vehicle cabin.

4. The method according to claims 1 and 2, wherein
   the matching the second-type instruction with the lip motion information of the in-vehicle member in the first position, to obtain a matching result is specifically:
   determining the matching result between the second-type instruction and the lip motion information of the in-vehicle member in the first position based on a preset threshold and a matching degree between the second-type instruction and the lip motion information of the in-vehicle member in the first position.

5. The method according to any one of claims 1, 2, and 4, wherein the second-type instruction is a speech waveform sequence extracted from the audio data or text instruction information recognized based on the audio data.

6. The method according to any one of claims 1 to 4, wherein the lip motion information of the in-vehicle member in the first position is an image sequence of lip motion of the in-vehicle member in the first position in the target time period.

7. The method according to any one of claims 1 to 6, wherein the method further comprises:

   when the audio data comprises the second-type instruction, obtaining image data of in-vehicle members in other N positions in the vehicle; and

extracting, from the image data of the in-vehicle members in the other N positions in the vehicle, lip motion information of the in-vehicle members in the other N positions in the vehicle in the target time period;

the matching the second-type instruction with the lip motion information of the in-vehicle member located in the first position in the vehicle, to obtain a matching result is specifically:

matching the second-type instruction with the lip motion information of the in-vehicle member located in the first position in the vehicle and the lip motion information of the in-vehicle members in the N positions, to obtain matching degrees between lip motion information of (N + 1) in-vehicle members and the second-type instruction; and obtaining lip motion information with the highest matching degree; and

the when determining, based on the matching result, that the second-type instruction matches the lip motion information of the in-vehicle member located in the first position in the vehicle, sending indication information indicating to execute the second-type instruction is specifically:

when the lip motion information with the highest matching degree is the lip motion information of the in-vehicle member located in the first position in the vehicle, sending the indication information indicating to execute the second-type instruction.

8. A speech instruction control device, comprising one or more processor, wherein the one or more processor is configured to:

obtain a first-type instruction and lip motion information of an in-vehicle member located in a first position in a vehicle, wherein the first-type instruction is obtained based on target audio data collected in a vehicle cabin in a target time period, and the target time period is a time period corresponding to the second-type instruction in the audio data;

match the second-type instruction with the lip motion information of the in-vehicle member in the first position, to obtain a matching result; and

when it is determined, based on the matching result, that the second-type instruction matches the lip motion information of the in-vehicle member in the first position, send indication information indicating to execute the second-type instruction.

9. The device according to claim 8, wherein the first position is a driver's seat.

10. The device according to claims 8 and 9, wherein

that the processor obtains a second-type instruction and lip motion information of an in-vehicle member located in a first position in a vehicle is specifically:

the processor obtains the target audio data in the vehicle cabin; obtains image data in the vehicle cabin when it is recognized that the target audio data comprises the second-type instruction; and extracts the lip motion information of the in-vehicle member in the first position from the image data in the vehicle cabin.

11. The device according to any one of claims 8 to 10, wherein

that the processor matches the second-type instruction with the lip motion information of the in-vehicle member in the first position, to obtain a matching result is specifically:

the processor determines the matching result between the second-type instruction and the lip motion information of the in-vehicle member in the first position based on a preset threshold and a matching degree between the second-type instruction and the lip motion information of the in-vehicle member in the first position.

12. The device according to any one of claims 8 to 11, wherein the second-type instruction is a speech waveform sequence extracted from the audio data or text instruction information recognized based on the audio data.

13. The device according to any one of claims 8 to 11, wherein the lip motion information of the in-vehicle member in the first position is an image sequence of lip motion of the in-vehicle member in the first position in the target time period.

14. A chip system, wherein the chip system comprises at least one processor, a memory, and an interface circuit, the memory, the interface circuit, and the at least one processor are interconnected through a line, and the at least one memory stores instructions; and when the instructions are executed by the processor, the method according to any one of claims 1 to 7 is implemented.

15. A computer-readable storage medium, wherein the computer-readable medium is configured to store program code, and the program code comprises the method according to any one of claims 1 to 7.

FIG. 1

FIG. 2

FIG. 3

EP 4 682 846 A2

FIG. 4

Obtain a training sample — S701

Train an initialized neural network by using lip motion information of a training user and M pieces of instruction information as training input, and by using matching degrees between the lip motion information of the training user and the M pieces of instruction information as M labels, to obtain a target feature matching model — S702

FIG. 5

FIG. 6

Feature matching

Lip motion
information of a driver

Instruction
information

FIG. 7A

FIG. 7B

801

Internet

Server

Send instruction
information and lip
motion information

800

FIG. 8

Obtain audio data in a vehicle —— S1601

Obtain video data when it is recognized that the audio data includes first-type instruction information —— S1602

Extract lip motion information of members in N positions in the vehicle from the video data —— S1603

Input instruction information and the lip motion information of the N members into a target feature matching model, to obtain matching degrees between the lip motion information of the N members and the instruction information —— S1604

Determine, based on the matching degrees, a position area to execute an instruction corresponding to the instruction information —— S1605

FIG. 9

Obtain audio data in a vehicle cabin | S1701

Obtain first video data when the audio data includes second-type instruction information, where the first video data is video data including an in-vehicle member located in a first position in a vehicle | S1702

Extract, from the first video data, lip motion information of the in-vehicle member located in the first position in the vehicle | S1703

Input instruction information and the lip motion information of the in-vehicle member located in the first position in the vehicle into a target feature matching model, to obtain a first matching degree between the lip motion information of the in-vehicle member located in the first position in the vehicle and the instruction information | S1704

Determine, based on the first matching degree, whether to execute an instruction corresponding to the instruction information | S1705

FIG. 10

S1001: Obtain instruction information and lip motion information of N in-vehicle members located in a vehicle cabin

↓

S1002: Input the instruction information and the lip motion information of the N in-vehicle members located in the vehicle cabin into a target feature matching model, to obtain matching degrees between the lip motion information of the in-vehicle members in the N positions and the instruction information

↓

S1003: Use, as a target position to execute an instruction corresponding to the instruction information, a position of a member corresponding to lip motion information of a user with the highest matching degree

FIG. 11

S1021: Obtain instruction information and lip motion information of an in-vehicle member located in a first position in a vehicle

↓

S1022: Input the instruction information and the lip motion information of the in-vehicle member located in the first position in the vehicle into a target feature matching model, to obtain a first matching degree between the lip motion information of the in-vehicle member located in the first position in the vehicle and the instruction information

↓

S1023: Determine, based on the first matching degree, whether to execute an instruction corresponding to the instruction information

FIG. 12

Intelligent device 40     Microphone        Camera

402

403

Processor

401

## FIG. 13

Neural network training apparatus 60

| Obtaining unit 601 | → | Training unit 602 |

## FIG. 14

~ 200

**Intelligent device 70**

Microphone

Camera

~ 702

~ 703

Processor

~ 701

**Service apparatus 80**

Processor

802

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010631879